# EUROPEAN PATENT SPECIFICATION

(11) **EP 4 626 670 B1**
(45) Date of publication and mention of the grant of the patent: **18.11.2026**
(21) Application number: 24703819.3
(22) Date of filing: 13.02.2024
(51) Int. Cl.: B29B 17/00, B29B 7/00, B29B 7/48, B29B 7/72, B29B 7/82, B29C 45/00, B29C 48/275, B29C 48/40, B29C 48/57, B29C 48/625, B29C 48/80, B29C 48/875, B29C 48/92, B29K 23/00, B29K 105/26

(54) **POLYPROPYLENE COMPOSITION FOR INJECTION MOLDING**
POLYPROPYLENZUSAMMENSETZUNG ZUM SPRITZGIESSEN
COMPOSITION DE POLYPROPYLÈNE POUR MOULAGE PAR INJECTION

(30) Priority: 14.02.2023 EP 23315029
(43) Date of publication of application: 08.10.2025
(73) Proprietor: TotalEnergies OneTech, 92400 Courbevoie (FR); Université Claude Bernard Lyon 1 (UCBL), 69100 Villeurbanne (FR); Centre National de la Recherche Scientifique (CNRS), 75016 Paris (FR); Université Jean Monnet Saint-Étienne, 42023 Saint-Étienne Cedex 2 (FR); Institut National des Sciences Appliquées de Lyon (INSA Lyon), 69621 Villeurbanne Cedex (FR)
(72) Inventor: LHOST, Olivier, 7181 Seneffe (BE); NAVEZ, Pascal, 7181 Seneffe (BE); TROLEZ, Yves, 7181 Seneffe (BE); CASSAGNAU, Philippe, 69622 Villeurbanne (FR); ABOU-TAHA, Mohammad, 01630 Saint Genis Pouilly (FR); DELAGE, Karim, 69100 Villeurbanne (FR)
(74) Representative: Mellet, Valérie Martine
(86) International application number: PCT/EP2024/053600
(87) International publication number: WO 2024/170554

(56) References cited:
- WO-A1-2021/040760
- WO-A1-2021/216284
- JP-A- 2011 255 652
- US-A- 3 563 972
- US-A- 3 862 265
- US-A- 3 898 209
- US-A- 4 707 524
- US-A- 6 060 584

## Description

### Technical Field

The present disclosure relates to polypropylene compositions suitable for injection molding, with preference comprising recycled polypropylene, as well as injection molded articles comprising such polypropylene compositions.

### Technical Background

There are many ways to present the range of polypropylene grades that are available to a person skilled in the art. One option corresponds to a split of the product range into two families, the "straight-reactor grades" (SR-PP) and the "Controlled-Rheology grades" (CR-PP). SR-PP grades correspond to the products that are pelletized as it when exiting from the reactors. Of course, several additives (antioxidant, anti-acid, ...) are classically introduced but, globally, there is no wish to change, during the pelletization step, the polymer architecture and thus the main polymer properties.

Upon the needs, it is sometimes useful to have the possibility to treat an existing polypropylene or an existing polypropylene composition to modify some properties. Nowadays, to facilitate subsequent recycling of the polypropylenes or polypropylene compositions, there is a need for treatments and processes that allow achieving such modifications without having to blend in other polyolefins and/or additives. Properties that might need to be modified are, for example, the melt flow index, the viscosity, the odours, the level of impurities etc. For example, methods for increasing the melt flow index of polypropylene exist. However, in general, these methods involve reactive extrusion with the addition of peroxides.

These are the CR-PP grades, wherein peroxides are introduced during the extrusion step. Doing so, the mean molecular weight and the molecular weight distribution are both reduced, inducing a significant change in the properties. After extrusion, the processability of the resin will be improved (the melt index is increased) and the CR-PP balance of mechanical properties is slightly different from the equivalent balance of an SR-PP at a similar melt index.

There is a global request from the market to have cleaner resins, i.e. resins with the lowest possible content in residuals. Of course, when peroxides are introduced to produce CR-PP, the final products contain decomposition products of the peroxide. There are more and more requests from the market to get rid of these peroxide degradation products and to have cleaner grades.

For the moment being, CR-PP grades are mostly produced thanks to the use of peroxides during the extrusion process. If "resins without peroxide degradation products" are requested, raw material producers are only able to propose "SR-PP" from their range of products. If narrow molecular weight distribution is mandatory for the application, polypropylene grades produced with metallocene catalyst may be proposed but, in general, it is sometimes difficult to countertype all properties of a CR-PP with another grade free from peroxide degradation products. In some other cases, in the frame of the rationalization of the fluff product range produced in the reactor, it is interesting to produce a long campaign of one specific fluff and to develop several grades from it (i.e., one SR-PP and one or more CR-PP thanks to various adjustment of the peroxide content during the extrusion).

In addition, if high peroxide content must be avoided, e.g., to avoid too many peroxide residuals, the melt index increase of polypropylene in a standard extrusion process is limited.

It would be interesting to keep the option of a reduction of the mean molecular mass and the molecular weight distribution during the extrusion but to be able to do so without any peroxide introduction or with a limited peroxide introduction.

Also, there is a need to improve the method of treatment of recycled polypropylene-containing material. There is a need to produce material comprising recycled polypropylene-containing material that are suitable for injection-molding.

WO2021/064113 discloses a method wherein a polyolefin composition is produced with a method wherein ultrasounds are applied to a material that can be recycled polyolefin. While the disclosed method is providing very good results there is still room for further improvements in such a field in particular for the implementation of methods or processes at an industrial level. There is also a need for simple and cost-effective processes.

US 3 862 265 A relates to modified polymers, such as polyolefins having improved flow and, in some instances, improved adhesion properties over that of a polyolefin base stock used as a starting material. The modified polyolefins are produced by a controlled reaction involving degradation in an extruder, in which an initiator is injected under conditions of either maximum distribution or intensive mixing. This document discloses the advantages of the use of free-radical initiators to obtain the modification at fairly low temperatures of from 400 to 600°F (i.e. from about 204 to about 316 °C).

US 6 060 584 A discloses a process for the production of degraded polyolefin. The process involves introducing polyolefin into one end of a vented multi-screw extruder, in the substantial absence of a free radical initiator and oxidizing agent, and removing degraded polyolefin from the opposite end of the extruder.

US 3 563 972 A discloses a method for producing a polypropylene composition having melt elasticity (swell) values between 1.5 and 3.0 comprises contacting the polypropylene with oxygen, heating the polypropylene in the feed-end of an extruder-reactor at temperatures between 600 and 1,000 °F (i.e. from about 316 to about 538°C). and then cooling the polypropylene to a melt temperature not over 600 °F (i.e. about 316°C). A polypropylene composition having a melt elasticity (swell) of less than 3.0 has a molecular weight distribution which is very narrow as compared to commercial polypropylene compositions.

US 3 898 209 A teaches that the rheology of C3+ polyolefins, e.g. polypropylene can be economically and conveniently controlled by injecting under pressure certain critical quantities of oxygen in an inert gas, e.g., air into melted polymer as it is being processed within an extruder.

WO2021/040760 provides polyolefin compositions and films and methods for producing such films. The polyolefin composition contains about 40 wt% to about 95 wt% of broad orthogonal composition distribution (BOCD) polyethylene and about 5 wt% to about 60 wt% of a polypropylene, by weight of the polyolefin composition. The polyolefin composition has a 1% secant flexural modulus in the machine direction (MD) of greater than 200 MPa and a 1% secant flexural modulus in the transverse direction (TD) of greater than 200 MPa, and a Tensile at Yield strength in the MD of greater than 8.5 MPa and a Tensile at Yield strength in the TD of greater than 9.7 MPa.

### Summary

It has now been found that one or more of the needs mentioned above can be fulfilled by a new polypropylene composition that is suitable for injection molding. Wherein the said polypropylene composition can be produced by performing a single extrusion of existing polypropylene-containing material, such as recycled polypropylene-containing material.

According to a first aspect, the present invention relates to a polypropylene composition comprising at least 70 wt.% of polypropylene based on the total weight of the polypropylene composition, remarkable in that the polypropylene composition has:
- a melt index MI₂ ranging from 10.0 to 600.0 g/10 min as determined according to ISO 1133-2011 at 230 °C under a load of 2.16 kg;
- an Mz below 1,000,000 g/mol as determined by size exclusion chromatography;
- an Mw/Mn ranging from 2.2 to 10.0 as determined by size exclusion chromatography
- a ratio of complex viscosity at a frequency of 0.01 rad/sec to the complex viscosity at a frequency of 100 rad/sec of at most 8.0, said ratio being measured at 190°C; and
- a tan delta at 0.1 rad at 190°C above 2.5;
- and an activation energy of flow (Ea) of at least 41.0 kJ/mol as determined according to the method of the description;
with preference, the polypropylene composition has an Mz below 600,000 g/mol as determined by size exclusion chromatography.

According to a second aspect the present disclosure relates to a process to produce a polypropylene composition according to the first aspect remarkable in that it comprises the following steps:
a) providing an extruder with thermal regulation devices;
b) providing an initial polypropylene-containing material comprising at least 70 wt.% of polypropylene based on the total weight of the initial polypropylene-containing material;
c) extruding the initial polypropylene-containing material to obtain a polypropylene composition; and
d) recovering a polypropylene composition;
wherein step (c) of extruding comprises a thermal treatment of the initial polypropylene-containing material at a maximum barrel temperature Ts of at least 345°C in one or more hot zones of the extruder.

Surprisingly it has been found that it was possible to upgrade an initial polypropylene-containing material to a higher melt index and lower viscosity at a very high temperature, thereby reaching values suitable for injection molding applications or other applications by a specific thermal treatment. The process is remarkable in that it does not need additives addition or other specific treatments such as ultrasounds. In particular, the increase of the melt index is obtained without the use of flow modifiers such as peroxides, or with fewer peroxides. The process is remarkable in its simplicity since it can be performed in a single-screw extruder or a twin-screw extruder.

Unexpectedly, the use of specific screw design, specific temperature profiles, additional heaters, or a combination of these options, allows producing CR-PP grades without any introduction of peroxides, so avoiding the presence of any peroxide degradation products in the final polypropylene composition; or with a reduced amount of peroxides thereby reducing the final content of peroxide degradation products.

For example, as demonstrated by the examples, performing the process with a thermal treatment at a temperature of at least 390°C allows obtaining a similar p polypropylene composition from the rheological point of view as the one obtained in a process involving a polymer degradation by the use of peroxides with a peroxide content of 0.6 wt.% based on the total weight of the polypropylene composition. The process of the disclosure allows attaining a high melt index without any peroxide introduction and therefore allows producing cleaner resins, i.e. resins with the lowest possible content in residuals.

For example, the process is performed without peroxides and/or ultrasounds.

According to a third aspect, the present disclosure relates to an article produced from the polypropylene composition according to the first or the second aspect remarkable in that the article is injection-molded; preferably, the article is selected from a bottle or a container and/or contains recycled polypropylene-containing material.

According to a fourth aspect, the present disclosure relates to a method to produce an article remarkable in that it comprises providing a polypropylene composition according to the first aspect or the second aspect and forming an article from said polypropylene composition by injection molding. With preference, the article is selected from a bottle or a container and/or the polypropylene composition is produced from recycled polypropylene-containing material

One or more of the following can be used to further define the process and the polypropylene composition according to the present disclosure.

In an embodiment, the maximum barrel temperature Ts of at least 345 °C in step (c) is obtained by self-heating the material wherein the extruder is a twin screw extruder and the one or more hot zones have a total length equal to or greater than 6 D with D being the screw diameter, wherein the screw profile comprises at least one hot zone with successive kneading blocks elements over a length of at least 4 D followed by a left-handed element with D being the screw diameter, wherein the thermal regulation devices, are set to initial imposed barrel temperatures ranging between 240 and 320 °C and are switched off when the barrel temperature in the zone spontaneously exceeds the imposed barrel temperature by at least 3 °C without the need of external heat application. In an embodiment, the thermal treatment is performed by self-heating of the material in a twin screw extruder, and the screw profile comprises two or more hot zones wherein a first hot zone comprises successive kneading blocks elements over a length of at least 4 D followed by a left-handed element with D being the screw diameter, and one or more additional hot zones placed downstream the first hot zone are filled mixing zones, each comprising kneading blocks elements over a length of at least 4 D followed by a kneading left-handed element or by a left-handed element with D being the screw diameter.

In an embodiment, the thermal treatment is performed by self-heating of the material in a twin-screw extruder and the successive kneading blocks elements of at least one hot zone of the extruder comprise disks with disks offset by 90 degrees and a disk width of at least 0.3 D wherein D being the screw diameter and/or one hot zone of the extruder is or comprises the melting zone of the extruder.

In an embodiment, the maximum barrel temperature Ts of at least 345 °C in step (c) is obtained by heating the material in an extruder selected from a single screw extruder or a twin-screw extruder, using the thermal regulation devices of the extruder; with preference, to have a maximum barrel temperature Ts ranging from 345 to 440 °C in at least one hot zone of the extruder.

For example, step (d) of extruding the polypropylene-containing material comprises performing the extrusion at a screw speed ranging from 100 to 1200 rpm; preferably ranging from 300 to 900 rpm or from 400 to 800 rpm.

For example, step (d) of extruding the polypropylene-containing material comprises performing the extrusion with a residence time of less than 10 minutes such as ranging from 10 seconds to 10 minutes; preferably with a residence time ranging from 20 seconds to 5 minutes; more preferably with a residence time ranging from 10 to 180 seconds; even more preferably, from 10 to 120 seconds; most preferably, from 20 to 100 seconds; and even most preferably, from 30 to 80 seconds.

In a preferred embodiment, the process is devoid of a step of providing one or more peroxides. In such an embodiment no peroxides are used so the content of peroxides or of peroxide degradation products is 0 ppm.

In an embodiment, the process comprises providing one or more peroxides wherein the content of peroxide is at most 500 ppm based on the total weight of the polypropylene-containing material.

In an embodiment, the initial polypropylene-containing material is selected to have a melt index (MI₂ R) ranging from 0.1 to 20.0 g/10 min as determined according to ISO 1133-2011 at 230 °C under a load of 2.16 kg; preferably ranging from 0.1 to 15.0 g/10 min or from 0.2 to 10.0 g/10 min; more preferably ranging from 0.3 to 8.0 g/10 min, or from 0.4 to 6.0 g/10 min, or from 0.5 to 5.0 g/10 min; even more preferably ranging from 0.6 to 4.5 g/10 min of from 0.7 to 4.0 g/10 min, or from 0.8 to 3.0 g/10 min.

In a preferred embodiment, the ratio of the melt index of the polypropylene composition (MI₂ T) to the melt index of the initial polypropylene-containing material (MI₂ R) is at least 6.

In some embodiments, the ratio of the melt index of the polypropylene composition (MI₂ T) to the melt index of the initial polypropylene-containing material (MI₂ R) is at least 10; preferably at least 30; preferably at least 50; preferably at least 80; preferably at least 100; preferably at least 200. This can be obtained by proper selection of the temperature of the thermal treatment and of the residence time.

For example, the polypropylene in the initial polypropylene-containing material is selected from a propylene homopolymer, a random copolymer of propylene, a heterophasic copolymer of propylene, or a mixture thereof.

For example, the initial polypropylene-containing material is selected to have an Mz above 800,000 g/mol as determined by size exclusion chromatography; preferably above 1,000,000 g/mol; more preferably above 1,200,00 g/mol.

For example, the initial polypropylene-containing material is selected to have an Mw/Mn ranging from 2.2 to 30.0 as determined by size exclusion chromatography; preferably from 3.5 to 20.0; more preferably, from 5.0 to 15.0.

For example, the initial polypropylene-containing material is selected to have a complex viscosity at a frequency of 0.01 rad/sec measured at 190°C of at least 8,000 Pa.s; preferably of at least 10,000 Pa.s; more preferably of at least 12,000 Pa.s.

For example, the initial polypropylene-containing material is selected to have a tan delta at 0.1 rad at 190°C above 2.5 preferably above 4.0 or ranging from 2.5 to 15.0

For example, the initial polypropylene-containing material is selected to have a melt index MI₂ ranging from 0.1 to 20.0 g/10 min as determined according to ISO 1133-2011 at 230 °C under a load of 2.16 kg; an Mz above 1,000,000 g/mol as determined by size exclusion chromatography; an Mw/Mn ranging from 2.2 to 30.0 as determined by size exclusion chromatography; a complex viscosity at a frequency of 0.01 rad/sec measured at 190°C of at least 8,000 Pa.s and preferably a tan delta at 0.1 rad at 190°C above 2.5.

For example, the initial polypropylene-containing material and/or the polypropylene composition comprises at least one polymer different from polypropylene in a content ranging from 0 to 20 wt.% based on the total weight of the polypropylene-containing material wherein at least one polymer different from polypropylene is selected from polyethylene (PE), polyacrylate, polypropylene terephthalate (PET), polystyrene (PS), polylactic acid (PLA), and any mixture thereof; preferably from 0.1 to 20 wt.% or from 0.5 to 5 wt.%. The content of the at least one polymer different from polypropylene can be determined by ¹³C-NMR.

This is in particular the case when the polypropylene composition is produced from a recycled material. For example, the at least one polymer different from polypropylene present in the polypropylene composition is or comprises polyethylene.

The polypropylene composition of the disclosure has an activation energy of flow (Ea) of at least 41.0 kJ/mol as determined according to the method of the description; preferably, of at least 41.5 kJ/mol or at least 42.0 kJ/mol; more preferably, of 42.5 kJ/mol or at least 43.0 kJ/mol; even more preferably, of at least 43.5 kJ/mol; most preferably, of at least 44.0 kJ/mol; even most preferably, of at least 44.5 kJ/mol or at least 45.0 kJ/mol or more than 45.0 kJ/mol.

For example, the polypropylene composition has an activation energy of flow (Ea) of at most 50.0 kJ/mol as determined according to the method of the description; preferably, of at most 49.5 kJ/mol; more preferably, of at most 49.0 kJ/mol; even more preferably, of at most 48.5 kJ/mol; most preferably, of at most 48.0 kJ/mol; even most preferably, of at most 47.5 kJ/mol.

For example, the polypropylene composition of the disclosure can be further characterized by an activation energy of flow (Ea) from 41.0 to 50.0 kJ/mol as determined according to the method of the description; preferably, from 42.0 to 49.5 kJ/mol; more preferably, from 43.0 to 49.0 kJ/mol; even more preferably, from 43.5 to 48.5 kJ/mol; most preferably, from 44.0 to 48.0 kJ/mol; even most preferably, from 44.5 to 47.5 kJ/mol.

In an embodiment, the polypropylene composition has a melt index MI₂ ranging from 11.0 to 600.0 g/10 min as determined according to ISO 1133-2011 at 230 °C under a load of 2.16 kg.

In an embodiment, the polypropylene composition has an Mw below 350,000 g/mol as determined by size exclusion chromatography; preferably, below 300,000 g/mol; preferably, below 250,000 g/mol; preferably, below 220,000 g/mol; preferably, below 200,000 g/mol.

In an embodiment, the polypropylene composition has an Mw above 50,000 g/mol as determined by size exclusion chromatography; preferably, above 55,000 g/mol; preferably, above 60,000 g/mol; preferably, above 65,000 g/mol; preferably, above 80,000 g/mol.

In an embodiment, the polypropylene composition has an Mn below 60,000 g/mol as determined by size exclusion chromatography; preferably, below 55,000 g/mol; preferably, below 50,000 g/mol.

In an embodiment, the polypropylene composition has an Mn above 10,000 g/mol as determined by size exclusion chromatography; preferably, above 15,000 g/mol; preferably, above 20,000 g/mol.

In an embodiment, the polypropylene composition has an Mz below 1,000,000 g/mol as determined by size exclusion chromatography; preferably, below 900,000 g/mol; preferably, below 800,000 g/mol; preferably, below 700,000 g/mol; preferably, below 600,000 g/mol; preferably, below 500,000 g/mol.

In an embodiment, the polypropylene composition has a ratio of complex viscosity at a frequency of 0.01 rad/sec to the complex viscosity at a frequency of 100 rad/sec of at most 8.0 said ratio being measured at 190°C.

In an embodiment, the polypropylene composition has a tan delta at 0.1 rad at 190°C above 2.5.

For example, the polypropylene composition has a melt index MI₂ ranging from 10.0 to 600.0 g/10 min as determined according to ISO 1133-2011 at 230 °C under a load of 2.16 kg; an Mz below 1,000,000 g/mol as determined by size exclusion chromatography; an Mw/Mn ranging from 2.2 to 10.0 as determined by size exclusion chromatography a ratio of complex viscosity at a frequency of 0.01 rad/sec to the complex viscosity at a frequency of 100 rad/sec of at most 8.0 said ratio being measured at 190°C and a tan delta at 0.1 rad at 190°C above 2.5.

In an embodiment, the polypropylene composition has a complex viscosity at 0.01 rad/sec at 190° C ranging from 50 to 2,000 Pa·s; for example, ranging from 50 to 300 Pa·s or ranging from 300 to 2,000 Pa·s.

In an embodiment, the polypropylene composition has an Mz/Mw of at most 7.0 as determined by size exclusion chromatography; preferably at most 6.0; preferably at most 5.5; preferably at most 5.0; preferably at most 4.5; preferably at most 4.0; preferably at most 3.5; preferably at most 3.0; preferably at most 2.5.

For example, the polypropylene composition recovered in step (d) and/or the polypropylene composition according to the second or the third aspect has an Mz/Mw of at least 1.5 as determined by size exclusion chromatography; preferably at least 1.6; preferably at least 1.7; preferably at least 1.8; preferably at least 1.9; preferably at least 2.0.

For example, the polypropylene composition recovered in step (d) and/or the polypropylene composition according to the second or the third aspect has an Mz/Mw ranging from 1.5 to 7.0 as determined by size exclusion chromatography; preferably, ranging from 1.6 to 6.0; preferably, ranging from 1.7 to 5.0; preferably, ranging from 1.8 to 4.0; or from 1.7 to 3.5.

In an embodiment, the polypropylene composition recovered in step (d) and/or the polypropylene composition according to the second or the third aspect has an Mw/Mn of at most 10.0 as determined by size exclusion chromatography; preferably at most 9.0; preferably at most 8.0; preferably at most 7.0; preferably at most 6.0; preferably at most 5.0; preferably at most 4.5; preferably at most 4.0; preferably at most 3.5.

For example, the polypropylene composition recovered in step (d) and/or the polypropylene composition according to the second or the third aspect has an Mw/Mn of at least 2.2 as determined by size exclusion chromatography; preferably at least 2.3; preferably at least 2.4; preferably at least 2.5 preferably at least 2.8; preferably at least 3.0.

For example, the polypropylene composition recovered in step (d) and/or the polypropylene composition according to the second or the third aspect has an Mw/Mn ranging from 2.2 to 10.0 as determined by size exclusion chromatography; preferably, ranging from 2.3 to 8.0; preferably, ranging from 2.2 to 6.0 or from 2.4 to 6.0; preferably, ranging from 2.5 to 5.5; or from 3.0 to 5.0.

For example, the polypropylene composition has:
- a melt index MI₂ ranging from 10.0 to 600.0 g/10 min as determined according to ISO 1133-2011 at 230 °C under a load of 2.16 kg;
- an Mz below 1,000,000 g/mol as determined by size exclusion chromatography;
- an Mw/Mn ranging from 2.2 to 10.0 as determined by size exclusion chromatography;
- a ratio of complex viscosity at a frequency of 0.01 rad/sec to the complex viscosity at a frequency of 100 rad/sec of at most 8.0 said ratio being measured at 190°C,
- a tan delta at 0.1 rad at 190°C above 2.5,
- a complex viscosity at 0.01 rad/sec at 190° C ranging from 50 to 2,000 Pa·s;
- an Mz/Mw ranging from 1.5 to 7.0 as determined by size exclusion chromatography; and
- an activation energy of flow (Ea) of at least 41.0 kJ/mol as determined according to the method of the description.

For example, step (c) of extruding the polypropylene-containing material comprises performing the extrusion at a screw speed ranging from 100 to 1200 rpm; preferably ranging from 300 to 900 rpm or from 400 to 800 rpm.

For example, step (c) of extruding the polypropylene-containing material comprises performing the extrusion with a residence time of less than 10 minutes such as ranging from 10 seconds to 10 minutes; preferably with a residence time ranging from 20 seconds to 5 minutes; more preferably with a residence time ranging from 10 to 180 seconds; even more preferably, from 10 to 120 seconds; most preferably, from 20 to 100 seconds; and even most preferably, from 30 to 80 seconds.

For example, the maximum barrel temperature Ts is at least 345 °C; preferably at least 350 °C or at least 355 °C; preferably at least 360 °C; preferably at least 370 °C more preferably at least 380 °C; even more preferably at least 385 °C or at least 390°C.

For example, the maximum barrel temperature Ts is at most 440 °C; preferably at most 435 °C; preferably at most 430 °C; preferably at most 425 °C.

For example, the maximum barrel temperature Ts is 345 to 440 °C; preferably, ranging from 345 °C to 430 °C; more preferably ranging from 350 °C to 425 °C; even more preferably, ranging from 360 °C to 420 °C and most preferably, ranging from 370 °C to 410 °C. The maximum barrel temperature is the highest temperature amongst the imposed or measured temperatures along the extruder.

In an embodiment the maximum barrel temperature Ts is at least 385 °C or at least 390 °C; preferably at least 395 °C; preferably at least 400 °C; preferably at least 410 °C more preferably at least 415 °C. For example, the maximum barrel temperature Ts is 390 to 440 °C; preferably, ranging from 390 °C to 430 °C; more preferably ranging from 395°C to 425 °C; even more preferably, ranging from 400 °C to 420 °C and most preferably, ranging from 385 °C to 430 °C.

In an alternative embodiment, the maximum barrel temperature Ts is less than 400°C or at most 395 °C; preferably at most 390 °C; preferably at most 385 °C; preferably at most 380 °C; more preferably at most 375°C. For example, the maximum barrel temperature Ts is 345 to 395 °C; preferably, ranging from 350 °C to 390 °C; more preferably ranging from 360°C to 385 °C; even more preferably, ranging from 345 °C to 380 °C and most preferably, ranging from 345 °C to 375 °C.

In an embodiment, step (c) of extruding comprises a thermal treatment of the initial polypropylene-containing material at a maximum barrel temperature Ts ranging from 345°C to 395°C in one or more hot zones of the extruder and the polypropylene composition recovered in step (d) has a tan delta at 0.1 rad at 190°C equal to or greater than 8.0.

In such an embodiment, the polypropylene composition recovered has a tan delta at 0.1 rad at 190°C equal to or greater than 8.0; preferably, equal to or greater than 9.0; preferably, equal to or greater than 10.0; preferably, equal to or greater than 12.0; preferably, equal to or greater than 15.0; preferably, equal to or greater than 18.0; preferably, equal to or greater than 20.0; preferably, equal to or greater than 25.0.

For example, the maximum barrel temperature Ts ranging from 345°C to 375°C in one or more hot zones of the extruder and the polypropylene composition recovered in step (d) has a tan delta at 0.1 rad at 190°C equal to or greater than 15.0.

In another embodiment, step (c) of extruding comprises a thermal treatment of the initial polypropylene-containing material at a maximum barrel temperature Ts ranging from 410 to 430°C in one or more hot zones of the extruder and the polypropylene composition recovered in step (d) and/or the polypropylene composition according to the second or the third aspect:
1. has a tan delta at 0.1 rad at 190°C that is equal to or below the tan delta of the initial polypropylene-containing material; and/or
2. a complex viscosity at 0.01 rad/sec at 190° C ranging from 50 to 300 Pa·s; and/or
3. has a melt index (MI₂ T) that is at least 50 times higher than the melt index of the initial polypropylene-containing material provided that the polypropylene-containing material is selected to have a melt index (MI₂ R) below 3.0 g/10 min as determined according to ISO 1133-2011 at 230 °C under a load of 2.16 kg.

### Description of the figures

- Figures 1 and 2 are examples of a screw profile that can be used in the context of the disclosure

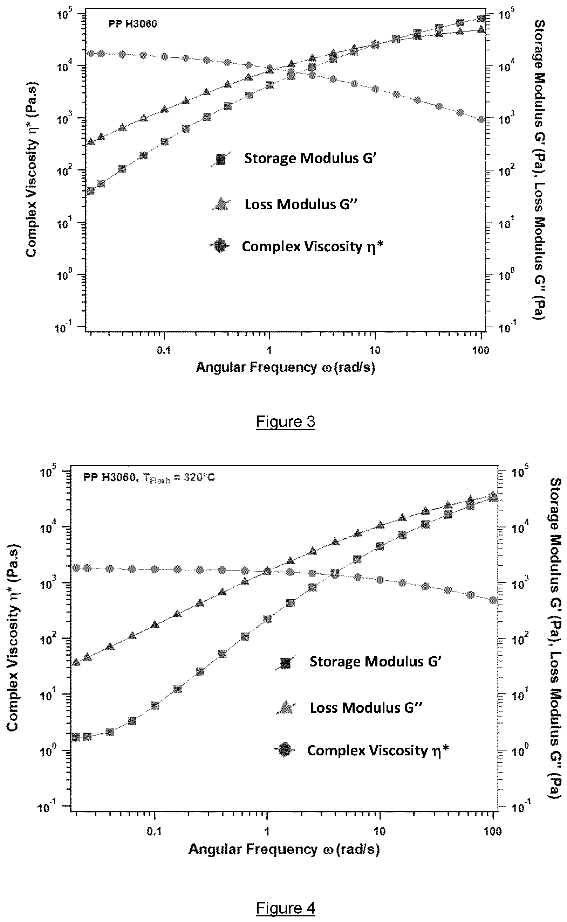

- Figure 3 is a graph plotting the complex viscosity to the angular frequency and further showing the loss (G") and storage modulus (G') for PP1 being PPH3060.
- Figure 4 is a graph plotting the complex viscosity to the angular frequency and further showing the loss (G") and storage modulus (G') for the polypropylene composition obtained with extrusion at 400 rpm and a Ts of 320 °C of PP1.

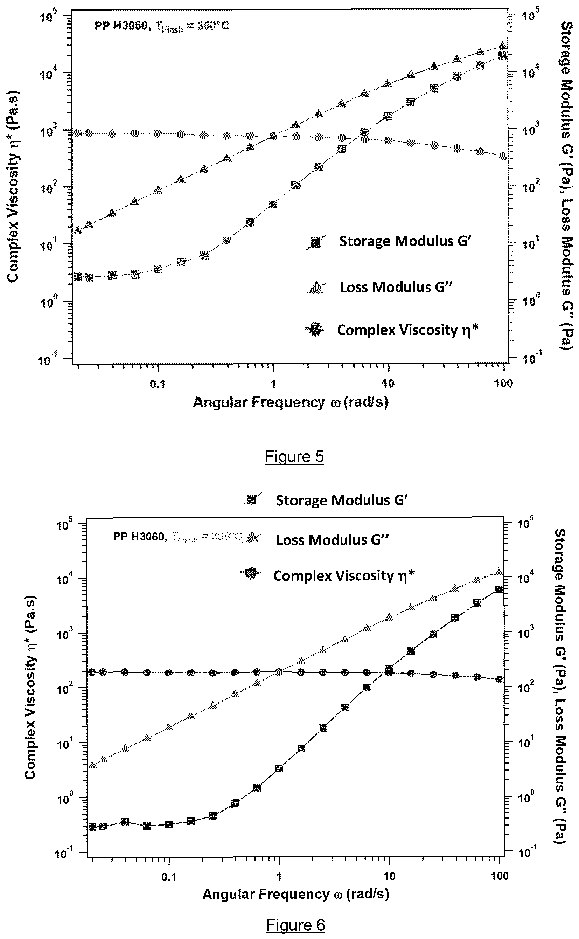

- Figure 5 is a graph plotting the complex viscosity to the angular frequency and further showing the loss (G") and storage modulus (G') for the polypropylene composition obtained with extrusion at 400 rpm and a Ts of 360 °C of PP1.
- Figure 6 is a graph plotting the complex viscosity to the angular frequency and further showing the loss (G") and storage modulus (G') for the polypropylene composition obtained with extrusion at 400 rpm and a Ts of 390 °C of PP1.

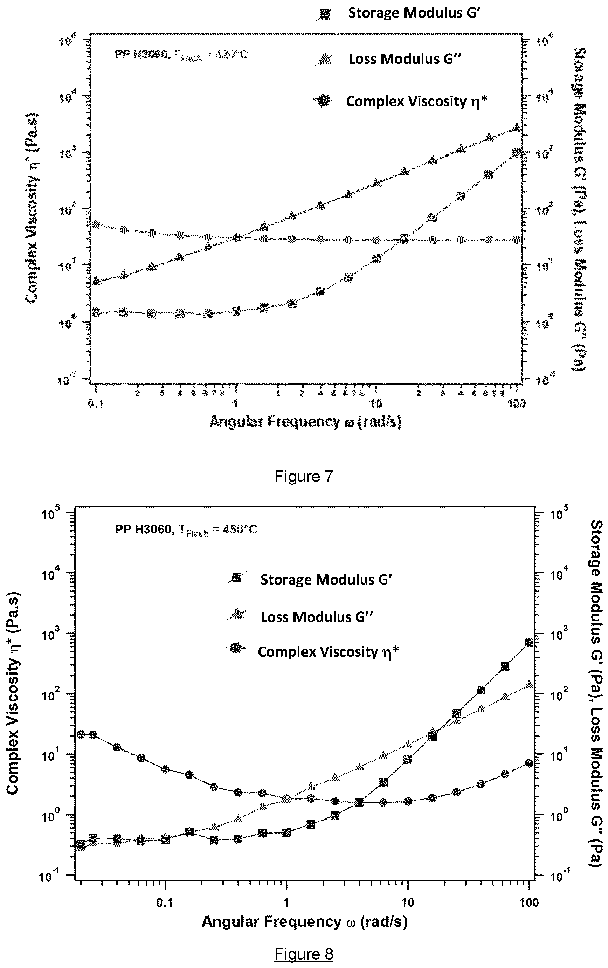

- Figure 7 is a graph plotting the complex viscosity to the angular frequency and further showing the loss (G") and storage modulus (G') for the polypropylene composition obtained with extrusion at 400 rpm and a Ts of 420 °C of PP1.
- Figure 8 is a graph plotting the complex viscosity to the angular frequency and further showing the loss (G") and storage modulus (G') for the polypropylene composition obtained with extrusion at 400 rpm and a Ts of 450 °C of PP1.

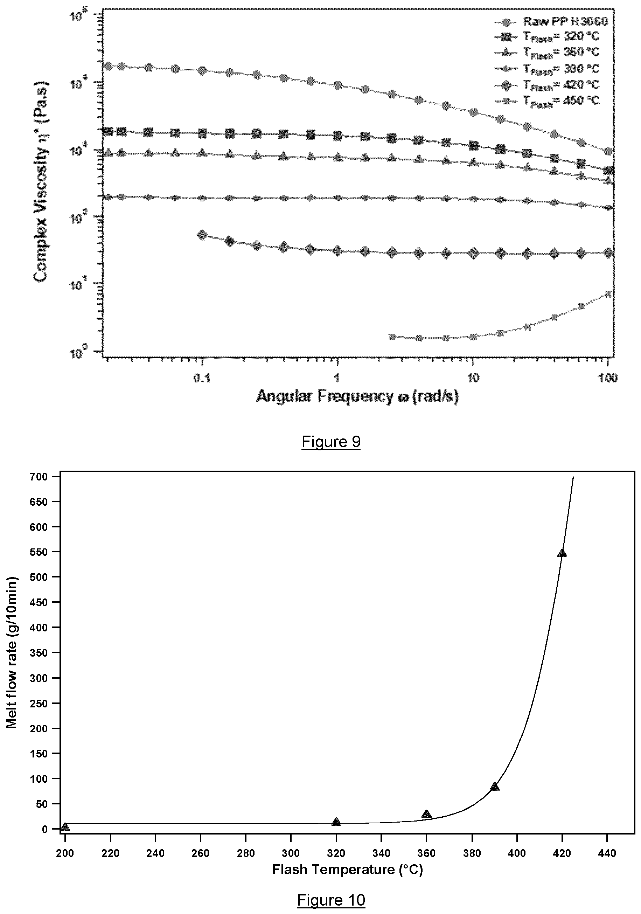

- Figure 9 is a comparative graph plotting the complex viscosity to the angular frequency for the different samples.
- Figure 10 is a graph plotting the melt flow rate to the temperature Ts (i.e. the flash temperature) for the different samples.
- Figure 11 is a graph plotting the Mz to the temperature Ts (i.e. the flash temperature) for the different samples.
- Figure 12 is Van Gurp Palmen plot of different polypropylene compositions.
- Figure 13 shows the evolution of the activation energy flow as a function of the melt index for PP subjected to thermal treatment and to peroxide degradation.

### DETAILED DESCRIPTION

It is to be understood that this disclosure is not limited to particular processes or compositions described, as such processes or compositions may, of course, vary. It is also to be understood that the terminology used herein is not intended to be limiting since the scope of the present disclosure will be limited only by the appended claims.

When describing the polymers, uses and processes of the disclosure, the terms employed are to be construed by the following definitions, unless a context dictates otherwise. For the disclosure, the following definitions are given:
As used herein, the singular forms "a", "an", and "the" include both singular and plural referents unless the context dictates otherwise. By way of example, "a composition" means one composition or more than one composition.

The terms "comprising", "comprises" and "comprised of as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (e.g., 1 to 5 can include 1, 2, 3, 4, 5 when referring to, for example, a number of elements, and can also include 1.5, 2, 2.75 and 3.80, when referring to, for example, measurements). The recitation of endpoints also includes the endpoint values themselves (e.g., from 1.0 to 5.0 includes both 1.0 and 5.0). Any numerical range recited herein is intended to include all sub-ranges subsumed therein.
Indication of a standard method to determine a parameter implies referring to the standard in force at the priority date of the application, in case the year of the standard is not indicated.

Reference throughout this specification to "one embodiment" or "an embodiment" means that a particular feature, structure or characteristic described in connection with the embodiment is included in at least one embodiment of the present disclosure. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the disclosure and form different embodiments, as would be understood by those in the art.

Unless otherwise defined, all terms used in disclosing the disclosure, including technical and scientific terms, have the meaning as commonly understood by one of ordinary skill in the art to which this disclosure belongs. By means of further guidance, definitions for the terms used in the description are included to better appreciate the teaching of the present disclosure. The terms "polypropylene" (PP) and "propylene polymer" may be used synonymously. The term "polypropylene" encompasses propylene homopolymer as well as propylene copolymer resin which can be derived from propylene and one or more comonomers selected from the group consisting of ethylene and C₄-C₂₀ alpha-olefins, such as 1-butene, 1-pentene, 4-methyl-1-pentene, 1-hexene, 1-octene, 1-decene, 1-dodecene, 1-tetradecene, 1-hexadecene, 1-octadecene and 1-eicosene.

The terms "polypropylene resin" or "propylene homopolymer resin" or "propylene copolymer resin" refer to polypropylene fluff or powder that is extruded, and/or melted and/or pelletized and can be produced through compounding and homogenizing of the polypropylene resin as taught herein, for instance, with mixing and/or extruder equipment. As used herein, the term "polypropylene" may be used as a shorthand for "polypropylene resin". The terms "fluff" or "powder" refer to polypropylene material with the hard catalyst particle at the core of each grain and is defined as the polymer material after it exits the polymerization reactor (or the final polymerization reactor in the case of multiple reactors connected in series).

The terms "Post-Consumer Resin", which may be abbreviated as "PCR", is used to denote the components of domestic waste, household waste or end of life vehicle waste. In other words, the PCRs are made of recycled products from waste created by consumers. The terms "Post-Industrial Resin", which may be abbreviated as "PIR", is used to denote the waste components from pre-consumer resins during packaging processes. In other words, the PIRs are made of recycled products created from scrap by manufacturers.

The term "recycled polypropylene composition" or "recycled polypropylene-containing material" contrasts with the term "virgin polypropylene composition" "virgin polypropylene-containing material", the term "virgin" is used to denote a polypropylene composition or material directly obtained from a polypropylene-containing polymerization plant. The terms "directly obtained" is meant to include that the polypropylene composition may optionally be passed through a pelletization step or an additivation step or both.

Under normal production conditions in a production plant, it is expected that the melt index (MI2, HLMI, MI5) will be different for the fluff than for the polypropylene-containing resin. Under normal production conditions in a production plant, it is expected that the density will be slightly different for the fluff than for the polypropylene-containing resin (if PCR resins are considered, it is not a question of fluff (powder) or pellets but it is a question of flakes or pellets). Unless otherwise indicated, density and melt index for the polypropylene-containing resin refer to the density and melt index as measured on the polypropylene-containing resin as defined above.

The present invention relates to a polypropylene composition comprising at least 70 wt.% of polypropylene based on the total weight of the polypropylene composition, remarkable in that the polypropylene composition has:
- a melt index MI2 ranging from 10.0 to 600.0 g/10 min as determined according to ISO 1133-2011 at 230 °C under a load of 2.16 kg;
- an Mz below 1,000,000 g/mol as determined by size exclusion chromatography;
- an Mw/Mn ranging from 2.2 to 10.0 as determined by size exclusion chromatography
- a ratio of complex viscosity at a frequency of 0.01 rad/sec to the complex viscosity at a frequency of 100 rad/sec of at most 8.0, said ratio being measured at 190°C;
- a tan delta at 0.1 rad at 190°C above 2.5; and
- an activation energy of flow (Ea) of at least 41.0 kJ/mol as determined according to the method of the description.

The polypropylene composition of the disclosure has an activation energy of flow (Ea) of at least 41.0 kJ/mol as determined according to the method of the description; preferably, of at least 41.5 kJ/mol or at least 42.0 kJ/mol; more preferably, of at least 42.5 kJ/mol or at least 43.0 kJ/mol; even more preferably, of at least 43.5 kJ/mol; most preferably, of at least 44.0 kJ/mol; even most preferably, of at least 44.5 kJ/mol or at least 45.0 kJ/mol or more than 45.0 kJ/mol.

For example, the polypropylene composition has an activation energy of flow (Ea) of at most 50.0 kJ/mol as determined according to the method of the description; preferably, of at most 49.5 kJ/mol; more preferably, of at most 49.0 kJ/mol; even more preferably, of at most 48.5 kJ/mol; most preferably, of at most 48.0 kJ/mol; even most preferably, of at most 47.5 kJ/mol.

For example, the polypropylene composition of the disclosure can be further characterized by an activation energy of flow (Ea) from 41.0 to 50.0 kJ/mol as determined according to the method of the description; preferably, from 42.0 to 49.5 kJ/mol; more preferably, from 43.0 to 49.0 kJ/mol; even more preferably, from 43.5 to 48.5 kJ/mol; most preferably, from 44.0 to 48.0 kJ/mol; even most preferably, from 44.5 to 47.5 kJ/mol.

The polypropylene composition has a melt index MI₂ ranging from 10.0 to 600.0 g/10 min as determined according to ISO 1133-2011 at 230 °C under a load of 2.16 kg.

For example, the polypropylene has a melt index MI₂ of at least 10.0 g/10 min as determined according to ISO 1133-2011 at 230 °C under a load of 2.16 kg; preferably at least 11.0 g/10 min; more preferably, at least 15.0 g/10 min; even more preferably at least 20.0 g/10 min and most preferably at least 22.0 g/10 min.

For example, the polypropylene composition has a melt index MI₂ of at most 600.0 g/10 min as determined according to ISO 1133-2011 at 230 °C under a load of 2.16 kg; preferably at most 500.0 g/10 min; more preferably, at most 400.0 g/10 min; even more preferably at most 300.0 g/10 min and most preferably at most 280.0 g/10 min.

In an embodiment, the polypropylene composition has an Mw below 350,000 g/mol as determined by size exclusion chromatography; preferably, below 300,000 g/mol; preferably, below 250,000 g/mol; preferably, below 220,000 g/mol; preferably, below 200,000 g/mol.

In an embodiment, the polypropylene has an Mw above 50,000 g/mol as determined by size exclusion chromatography; preferably, above 55,000 g/mol; preferably, above 60,000 g/mol; preferably, above 65,000 g/mol; preferably, above 80,000 g/mol.

In an embodiment, the polypropylene composition has an Mn below 60,000 g/mol as determined by size exclusion chromatography; preferably, below 55,000 g/mol; preferably, below 50,000 g/mol.

In an embodiment, the polypropylene composition has an Mn above 10,000 g/mol as determined by size exclusion chromatography; preferably, above15,000 g/mol; preferably, above 20,000 g/mol.

In an embodiment, the polypropylene composition has an Mz below 950,000 g/mol as determined by size exclusion chromatography; preferably, below 900,000 g/mol; preferably, below 800,000 g/mol; preferably, below 700,000 g/mol; preferably, below 600,000 g/mol; preferably, below 500,000 g/mol, preferably, below 490,000 g/mol.

For example, the polypropylene composition has a melt index MI₂ ranging from 10.0 to 600.0 g/10 min as determined according to ISO 1133-2011 at 230 °C under a load of 2.16 kg; an Mz below 600,000 g/mol as determined by size exclusion chromatography; a ratio of complex viscosity at a frequency of 0.01 rad/sec to the complex viscosity at a frequency of 100 rad/sec of at most 8.0 said ratio being measured at 190°C and a tan delta at 0.1 rad at 190°C above 2.5.

In an embodiment, the polypropylene composition has a complex viscosity at 0.01 rad/sec at 190° C ranging from 50 to 2,000 Pa·s; for example, ranging from 50 to 300 Pa·s or ranging from 300 to 2,000 Pa·s.

In an embodiment, the polypropylene composition has an Mz/Mw of at most 7.0 as determined by size exclusion chromatography; preferably at most 6.0; preferably at most 5.5; preferably at most 5.0; preferably at most 4.5; preferably at most 4.0; preferably at most 3.5; preferably at most 3.0; preferably at most 2.5.

For example, the polypropylene composition has an Mz/Mw of at least 1.5 as determined by size exclusion chromatography; preferably at least 1.6; preferably at least 1.7; preferably at least 1.8; preferably at least 1.9; preferably at least 2.0.

For example, the polypropylene composition has an Mz/Mw ranging from 1.5 to 7.0 as determined by size exclusion chromatography; preferably, ranging from 1.6 to 6.0; preferably, ranging from 1.7 to 5.0; preferably, ranging from 1.8 to 4.0; or from 1.7 to 3.5.

The polypropylene composition has an Mw/Mn of at most 10.0 as determined by size exclusion chromatography; preferably at most 9.0; preferably at most 8.0; preferably at most 7.0; preferably at most 6.0; preferably at most 5.0; preferably at most 4.5; preferably at most 4.0; preferably at most 3.5.

The polypropylene composition has an Mw/Mn of at least 2.2 as determined by size exclusion chromatography; preferably at least 2.3; preferably at least 2.4; preferably at least 2.5 preferably at least 2.8; preferably at least 3.0.

The polypropylene composition has an Mw/Mn ranging from 2.2 to 10.0 as determined by size exclusion chromatography; preferably, ranging from 2.3 to 8.0; preferably, ranging from 2.4 to 6.0; preferably, ranging from 2.5 to 5.5; or from 3.0 to 5.0.

### The process to produce such a polypropylene composition

The present disclosure also relates to a process for producing such a polypropylene composition remarkable in that it comprises the following steps:
a) providing an extruder with thermal regulation devices;
b) providing an initial polypropylene-containing material comprising at least 70 wt.% of polypropylene based on the total weight of the initial polypropylene-containing material;
c) extruding the initial polypropylene-containing material to obtain a polypropylene composition; and
d) recovering a polypropylene composition;
wherein step (c) of extruding comprises a thermal treatment of the initial polypropylene-containing material at a maximum barrel temperature Ts of at least 345°C in one or more hot zones of the extruder.

It is understood that the polypropylene composition recovered at step d) is a polypropylene composition comprising at least 70 wt.% of polypropylene based on the total weight of the polypropylene composition, remarkable in that the polypropylene composition has:
- a melt index MI2 ranging from 10.0 to 600.0 g/10 min as determined according to ISO 1133-2011 at 230 °C under a load of 2.16 kg;
- an Mz below 1,000,000 g/mol as determined by size exclusion chromatography;
- an Mw/Mn ranging from 2.2 to 10.0 as determined by size exclusion chromatography
- a ratio of complex viscosity at a frequency of 0.01 rad/sec to the complex viscosity at a frequency of 100 rad/sec of at most 8.0, said ratio being measured at 190°C;
- a tan delta at 0.1 rad at 190°C above 2.5.

Surprisingly it was found that the polypropylene composition recovered at step d) is a polypropylene composition has a high activation energy of flow so the polypropylene composition recovered at step d) is a polypropylene composition comprising at least 70 wt.% of polypropylene based on the total weight of the polypropylene composition, remarkable in that the polypropylene composition has:
- a melt index MI2 ranging from 10.0 to 600.0 g/10 min as determined according to ISO 1133-2011 at 230 °C under a load of 2.16 kg;
- an Mz below 1,000,000 g/mol as determined by size exclusion chromatography;
- an Mw/Mn ranging from 2.2 to 10.0 as determined by size exclusion chromatography
- a ratio of complex viscosity at a frequency of 0.01 rad/sec to the complex viscosity at a frequency of 100 rad/sec of at most 8.0, said ratio being measured at 190°C;
- a tan delta at 0.1 rad at 190°C above 2.5 ; and
- an activation energy of flow (Ea) of at least 41.0 kJ/mol as determined according to the method of the description.

The process involves increasing the melt index of the said initial polypropylene-containing material to produce a polypropylene composition with a melt index that is increased by a factor k of more than 6.0; preferably by a factor k of at least 7.0; preferably by a factor k of at least 8.0; preferably by a factor k of at least 10.0; preferably by a factor k of at least 15.0; preferably by a factor k of at least 20.0; preferably by a factor k of at least 30.0; preferably by a factor k of at least 35.0; preferably by a factor k of at least 40.0.

So that the ratio of the melt index of the polypropylene composition (MI₂ T) to the melt index of the initial polypropylene-containing material (MI₂ R) is more than 6.0; preferably of at least 7.0, preferably by at least 8.0; preferably at least 10.0; preferably at least 15.0; preferably at least 20.0; preferably at least 30.0; preferably at least 35.0; preferably at least 40.0.

It is observed that when using a specific screw design and so inducing strong thermomechanical degradation of the polymers, the relative melt index increase during the extrusion is less significant if the melt index of the starting material is already high.

### The extruder with one or more thermal regulation devices and step (c) of extruding the polypropylene-containing material to obtain a polypropylene composition

The treatment of the polypropylene-containing material to obtain a compatibilizer is performed by extrusion wherein step (c) of extruding comprises a thermal treatment of the polypropylene-containing material at a maximum barrel temperature Ts of at least 345 °C in one or more hot zones of the extruder; preferably wherein extrusion is performed with a residence time of less than 10 min.

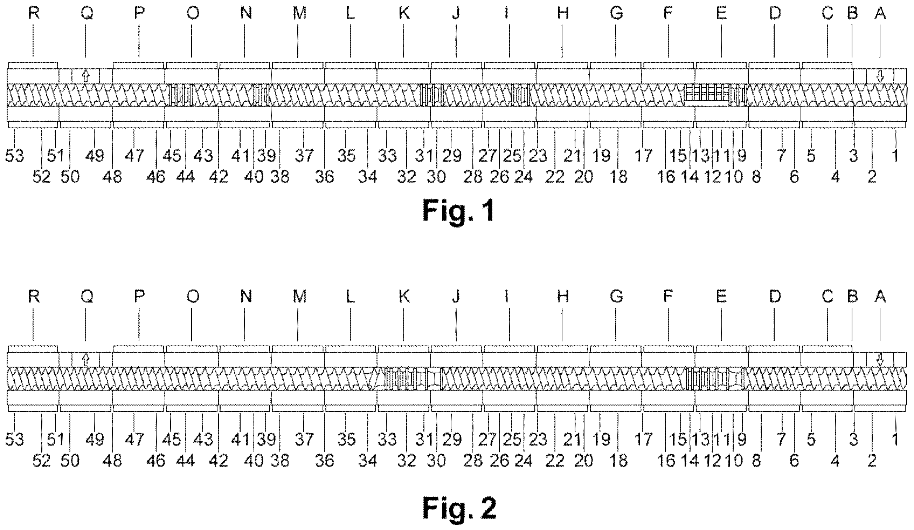

The extruder can be a single-screw extruder or a twin-screw extruder. In a preferred embodiment, the extruder is a twin-screw extruder. The extruder can be a single screw extruder or a twin-screw extruder provided with a standard configuration for the screw profile (for example when the process comprises a thermal treatment by heating the material using the thermal regulation devices) or is a twin-screw extruder provided with a screw profile that shows an aggressive design, as shown in figure 1, to impart high mechanical energy to the polypropylene-containing material (for example when the process comprises a thermal treatment by self-heating) or by heating the material using the thermal regulation devices. thermal regulation devices can be used as a heating means to impart thermal energy to the polypropylene-containing material in the extruder, in addition to the thermal energy already generated by the mixing. In the present disclosure, the thermal regulation devices are only used to initiate the process and are switched off before the temperature Ts is reached.

Extrusion mixing varies with the type of screw and screw profile and is capable of significant generation of mechanical energy, such as shear energy and/or elongation energy. Therefore, energy is introduced into the extrusion process in terms of mechanical energy and thermal energy. Heating and/or cooling of the barrels can be achieved, for example, electrically, by steam, or by the circulation of thermally controlled liquids such as oil or water.

The extruder screw comprises a screw main body, that is composed of cylindrical elements and an axis of rotation supporting the elements. The axis of rotation extends straight from its basal end to its tip. In a state in which the extruder screw is rotatably inserted in the cylinder of the barrel, the basal end of the extruder screw is positioned on one end side of the barrel, on which the supply port is provided, and the tip of the extruder screw is positioned on the other end side of the barrel, on which the discharge port is provided.

Screw extruders have a modular system that allows different screw elements to be drawn into the central shaft to build a defined screw profile. The extruder screw may comprise one or more elements selected from conveying elements, kneading elements, right-handed (normal) screw elements, left-handed (inverse) screw elements and any combination thereof. The elements are arranged in a defined order from the basal end to the tips of the extruder screw and this order, as well as the type and number of elements involved, define the screw profile. Extruders and screw elements are commercially available for example at Leistritz.

In an embodiment of the disclosure, the treatment of the polypropylene-containing material is handled by mechanical energy.

When high mechanical energy is requested, the extruder provided has a specific screw profile that is built to be "aggressive", meaning that high mechanical energy will be imparted to the polypropylene-containing material. High mechanical energy will increase the temperature in the extruder as known to the person skilled in the art so the thermal treatment is performed by self-heating of the material. Self-heating of the material is achieved from viscous dissipation in a twin-screw extruder.

In such an embodiment, the twin-screw extruder is selected to comprise one or more hot zones, preferably being filled mixing zones, wherein the total length of the one or more hot zones is equal to or greater than 6 D with D being the screw diameter.

It is understood that in case the screw profile is selected to comprise a single hot zone, then the total length of the said hot zone is equal to or greater than 6 D with D being the screw diameter. In such a case, the hot zone is also the melting zone of the twin-screw extruder.

In case, the screw profile comprises two or more hot zones, then a first hot zone comprises successive kneading blocks elements over a length of at least 4 D followed by a left-handed element with D being the screw diameter, and one or more additional hot zones placed downstream the first hot zone are filled mixing zones, each comprising kneading blocks elements over a length of at least 4 D followed by a kneading left-handed element or by a left-handed element with D being the screw diameter. For example, the twin-screw extruder comprises two filled mixing zones wherein each of the filled mixing zones has a length equal to or greater than 4 D with D being the screw diameter. Preferably the first hot zone is or comprises the melting zone of the extruder.

Various mixing elements could be considered in the one or more hot zones but the most preferred ones do not drive any forward conveying (dispersive kneading blocks elements with disks offset by 90 degrees). Other disk offset angles could be considered (for example 30 degrees, 45 degrees, or 60 degrees) but 90 degrees is preferred. The preferred minimum width of the disk is 0.3 D.

Thus, preferably, the successive kneading block elements of at least one hot zone comprise disks with disks offset by 90 degrees and a disk width of at least 0.3 D wherein D is the screw diameter.

For example, the twin-screw extruder comprises more than two filled mixing zones wherein the total length of filled mixing zones is equal to or greater than 8 D with D being the screw diameter.

For example, the strong melting zone of the twin-screw extruder is made of successive mixing elements over a length of 4 D, with D being the screw diameter, followed by a left-handed element; preferably a full-flight left-handed element.

In a preferred embodiment, the thermal regulation devices of the twin-screw extruder allow cooling of the barrels and the process comprises switching off the thermal regulation devices when the barrel temperature in the zone spontaneously exceeds the imposed barrel temperature by at least 1 °C without the need of external heat application; preferably, by at least 2 °C, preferably, by at least 3 °C; more preferably by at least 5 °C; even more preferably, by at least 8 °C; and most preferably, by at least 10 °C.

Indeed, when starting extrusion, thermal regulation devices will be switched on, in particular in the melting zone to allow the material to melt. Then, when the polymer is self-heating the thermal regulation devices are switched off to allow the increase of the temperature inside the extruder.

High rotation screw speeds are preferred, but the precise value of a high rotation screw speed is "extruder diameter" dependent. For example, when considering a diameter D of 18 mm twin-screw extruder, high rotational screw speed is considered to be higher than 500 rpm, preferably higher than 800 rpm. For example, when considering a diameter D = 58 mm twin-screw extruder, high rotational screw speed is considered to be higher than 250 rpm, preferably higher than 350 rpm.

Non-limiting examples of suitable extruder screws with specific screw profiles are illustrated in figures 1 and 2.

Using the above-presented process, a venting unit at the end of the extruder is not mandatory. When the thermal treatment is performed by heating the material in an extruder selected from a single screw extruder or a twin-screw extruder, the extruder provided can show either an extruder screw with a standard screw profile or with a specific screw profile (i.e., for enhanced self-heating).

The maximum barrel temperature Ts was found to influence not only the melt index but also the rheology of the polypropylene composition.

For example, the maximum barrel temperature Ts is at least 345 °C; preferably at least 350 °C or at least 355 °C; preferably at least 360 °C; preferably at least 365 °C more preferably at least 370 °C; even more preferably at least 380 °C and most preferably at least 390°C.

For example, the maximum barrel temperature Ts is at most 440 °C; preferably at most 435 °C; preferably at most 430 °C; preferably at most 425 °C.

For example, the maximum barrel temperature Ts is 345 to 440 °C; preferably, ranging from 345 °C to 430 °C; more preferably ranging from 350 °C to 425 °C; even more preferably, ranging from 360 °C to 420 °C and most preferably, ranging from 370 °C to 410 °C. The maximum barrel temperature is the highest temperature amongst the imposed or measured temperatures along the extruder.

In an embodiment the maximum barrel temperature Ts is at least 385°C or at least 390 °C; preferably at least 395 °C; preferably at least 400 °C; preferably at least 410 °C more preferably at least 415 °C. For example, the maximum barrel temperature Ts is 390 to 440 °C; preferably, ranging from 390 °C to 430 °C; more preferably ranging from 395°C to 425 °C; even more preferably, ranging from 400 °C to 420 °C and most preferably, ranging from 310 °C to 430 °C.

In an embodiment the maximum barrel temperature Ts is less than 400°C or at most 395 °C; preferably at most 390 °C; preferably at most 385 °C; preferably at most 380 °C; more preferably at most 375°C. For example, the maximum barrel temperature Ts is 345 to 395 °C; preferably, ranging from 350 °C to 390 °C; more preferably ranging from 360°C to 385 °C; even more preferably, ranging from 345 °C to 380 °C and most preferably, ranging from 345 °C to 375 °C.

The extrusion conditions may be adapted by the person skilled in the art to impart sufficient energy to obtain a compatibilizer with a melt index (MI₂ T) in the targeted range.

Screw speed can be adapted in function of the targeted maximum barrel temperature Ts and of the capacity of the extruder. Higher screw speed allows for a higher increase in the polymer temperature. For example, the screw speed ranges from 100 to 1200 rpm; preferably from 110 rpm to 1200 rpm; more preferably from 150 rpm to 1100 rpm; even more preferably from 200 rpm to 1000 rpm; most preferably from 300 rpm to 900 rpm; and even most preferably from 320 to 800 rpm or from 350 to 1200 rpm.

In an 18 mm screw diameter twin-screw extruder, the preferred screw speed is higher than 500 rpm; in a 58 mm screw diameter twin-screw extruder, the preferred screw speed is higher than 250 rpm.

For example, step (c) of extruding the polypropylene-containing material comprises performing the extrusion with a residence time of less than 10 minutes, such as ranging from 10 seconds to less than 10 minutes; preferably with a residence time ranging from 15 seconds to 8 minutes; or with a residence time ranging from 20 seconds to 5 minutes; more preferably with a residence time ranging from 10 to 180 seconds or from 10 to 120 seconds or from 20 to 100 seconds or from 30 to 80 seconds.

For example, the extruder comprises one or more venting parts at the end of the extruder (before the die).

For example, the extruder is selected to have a surface treatment. For example, one or more elements of the extruder are made of CrVNb microalloyed steel. Extruders with surface treatments are commercially available from Leistritz.

Although peroxides are not required, the process may further comprise providing one or more peroxides.

For example, the content of peroxide is at most 1000 ppm based on the total weight of the polypropylene-containing material; preferably at most 800 ppm; more preferably at most 500 ppm; even more preferably at most 200 ppm and most preferably at most 100 ppm.

For example, the content of peroxides is ranging from 0 to 1000 ppm based on the total weight of the polypropylene-containing material; preferably from 10 to 800 ppm; more preferably from 20 to 500 ppm, even more preferably from 30 to 250 ppm and most preferably from 50 to 100 ppm.

For example, the one or more peroxide are or comprise organic peroxides selected from the group consisting of diacetyl peroxide, cumyl-hydro-peroxide, dibenzoyl peroxide, dialkyl peroxide, 2,5-methyl-2,5-di(terbutylperoxy)-hexane, and combinations thereof.

In a preferred embodiment, the process is devoid of a step of providing one or more peroxides. In such an embodiment no peroxides are used so the content of peroxide is 0 ppm.

### The initial polypropylene-containing material and step (b) of providing an initial polypropylene-containing material

The process according to the disclosure comprises step (b) of providing a polypropylene-containing material comprising at least 70 wt.% of polypropylene based on the total weight of the polypropylene-containing material.

The polypropylene-containing material can be a virgin polypropylene-containing material, a recycled polypropylene-containing material or a mixture of virgin and recycled polypropylene-containing materials. In some embodiments, the polypropylene-containing material is a recycled polypropylene-containing material. As used herein, the terms "recycled polypropylene composition" encompasses both Post-Consumer Resins (PCR) and Post-Industrial Resins (PIR).

Suitable polypropylene includes but is not limited to homopolymer of ethylene, copolymer of ethylene and a higher alpha-olefin comonomer. Thus, preferably, the polypropylene in the polypropylene-containing material is one or more polypropylene homopolymers, one or more polypropylene copolymers, and any mixture thereof.

The term "copolymer" refers to a polymer, which is made by linking two different types of monomers in the same polymer chain. Preferred comonomers are alpha-olefins having from 3 to 20 carbon atoms or from 3 to 10 carbon atoms. More preferred comonomers are selected from the group comprising propylene, butene-1, pentene-1, hexene-1, heptene-1, octene-1, nonene-1, decene-1 and any mixture thereof. Even more preferred comonomers are selected from the group comprising butene-1, hexene-1, octene-1 and any mixture thereof. The most preferred comonomer is hexene-1.

The term "homopolymer" refers to a polymer that is made by linking only one monomer in the absence of comonomers. Ethylene homopolymers are therefore essentially without any comonomer. By "essentially without" it is meant that no comonomer is intentionally added during the production of the polypropylene, but can nevertheless be present in up to 0.2 wt.%, preferably in up to 0.1 wt.% and most preferably in up to 0.05 wt.%, relative to the total weight of the polypropylene.

In an embodiment, the propylene polymer is a propylene copolymer. The propylene copolymer can be a random copolymer, a heterophasic copolymer, or a mixture thereof.

The random propylene copolymer comprises at least 0.1 wt.% of one or more comonomers, preferably at least 1 wt.%. The random propylene copolymer comprises up to 10 wt.% of one or more comonomers and most preferably up to 6 wt.%. Preferably, the random copolymer is a copolymer of propylene and ethylene.

The heterophasic copolymer of propylene comprises a dispersed phase, generally constituted by an elastomeric ethylene-propylene copolymer (for example EPR), distributed inside a semicrystalline polypropylene matrix being a homopolymer of propylene or a random propylene copolymer.

With preference, the polypropylene is a homopolymer, a random copolymer of propylene and at least one comonomer or a mixture thereof. Preferably, the polypropylene is not and/or does not comprise a terpolymer.

The polypropylene-containing material is selected to comprise at least 70 wt.% of polypropylene based on the total weight of the polypropylene-containing material. With preference, the polypropylene-containing material is selected to comprise at least 80 wt.%; preferably, at least 90 wt.%; preferably, at least 95 wt.%. In an embodiment, the polypropylene-containing material is virgin material and consists of polypropylene (i.e. comprises 100 wt.% of polypropylene).

In an embodiment, the polypropylene-containing material is a recycled polypropylene-containing material. Recycled polypropylene-containing material may contain one or more polymers different from polypropylene.

In an embodiment, and in particular wherein the polypropylene-containing material is a recycled polypropylene-containing material; the polypropylene-containing material comprises at least one polymer different from polypropylene in a content ranging from 0 to 20 wt.% based on the total weight of the polypropylene-containing material wherein at least one polymer different from polypropylene is selected from polyethylene (PE), polyacrylate, polypropylene terephthalate (PET), polystyrene (PS), polylactic acid (PLA).

For example, the polypropylene-containing material comprises at least one polymer different from polypropylene in a content ranging from 0 to 20 wt.% based on the total weight of the polypropylene-containing material wherein at least one polymer different from polypropylene is selected from polyethylene (PE), polyacrylate, polypropylene terephthalate (PET), polystyrene (PS), polylactic acid (PLA), and any mixture thereof.

With preference, the polypropylene-containing material comprises at least one polymer different from polypropylene in a content ranging from 0 to 40 wt.% based on the total weight of the polypropylene-containing material; preferably from 0.1 to 20 wt.%; more preferably from 0.2 to 10 wt.%; and even more preferably from 0.5 to 5 wt.%. The content of the at least one polymer different from polypropylene can be determined by ¹³C-NMR.

For example, PCR polypropylene classically contains a small part of polyethylene (such as less than 5 wt. %). The content of polyethylene can be determined by ¹³C-NMR.

In an embodiment, the initial polypropylene-containing material is selected to have a melt index (MI₂ R) ranging from 0.1 to 20.0 g/10 min as determined according to ISO 1133-2011 at 230 °C under a load of 2.16 kg; preferably ranging from 0.1 to 15.0 g/10 min or from 0.2 to 10.0 g/10 min; more preferably ranging from 0.3 to 8.0 g/10 min, or from 0.4 to 6.0 g/10 min, or from 0.5 to 5.0 g/10 min; even more preferably ranging from 0.6 to 4.5 g/10 min of from 0.7 to 4.0 g/10 min, or from 0.8 to 3.0 g/10 min.

In an embodiment the initial polypropylene-containing material has a melt index (MI₂ R) of at least 0.10 g/10 min as determined according to ISO 1133-2011 at 230 °C under a load of 2.16 kg; preferably at least 0.15 g/10 min; more preferably at least 0.2 g/10 min, or at least 0.3 g/10 min or at least 0.4 g/10 min; even more preferably at least 0.5 g/10 min, or at least 0.6 g/10 min, or at least 0.2 g/10 min; most preferably at least 0.8 g/10 min and even most preferably at least 0.9 g/10 min, or at least 1.0 g/10 min.

In an embodiment the initial polypropylene-containing material has a melt index (MI₂ R) of at most 20.0 g/10 min as determined according to ISO 1133-2011 at 230 °C under a load of 2.16 kg; preferably at most 18.0 g/10 min or at most 15.0 g/10 min; more preferably at most 12.0 g/10 min, or at most 10.0 g/10 min; even more preferably at most 8.0 g/10 min or at most 6.0 g/10 min; most preferably at most 5.0 g/10 min or at most 4.5 g/10 min; and even most preferably at most 4.0 g/10 min, or at most 3.5 g/10 min; or at most 3.0 g/10 min; or at most 2.5 g/10 min.

For example, the initial polypropylene-containing material is selected to have an Mz above 800,000 g/mol as determined by size exclusion chromatography; preferably above 1,000,000 g/mol; more preferably above 1,200,00 g/mol.

In some embodiments, the initial polypropylene-containing material has an Mz/Mw of at least 4.0 as determined by gel permeation chromatography; preferably, ranging from 4.0 to 50.0; preferably, from 5.0 to 25.0; preferably, from 6.0 to 20.0; preferably, from 7.0 to 15.0.

For example, the initial polypropylene-containing material is selected to have a complex viscosity at a frequency of 0.01 rad/sec measured at 190°C of at least 8,000 Pa.s; preferably of at least 10,000 Pa.s; more preferably of at least 12,000 Pa.s.

In some embodiments, the initial polypropylene-containing material has a complex viscosity at 0.01 rad/sec at 190 °C of ranging from 10,000 to 80,000 Pa·s; preferably, ranging from 12,000 to 70,000 Pa·s; more preferably, ranging from 13,000 to 60,000 Pa·s; and even more preferably, ranging from 14,000 to 50,000 Pa·s.

In some embodiments, the initial polypropylene-containing material has an Mw/Mn ranging from 2.2 to 30.0 as determined by gel permeation chromatography; preferably ranging from 3.5 to 20.0; preferably ranging from 5.0 to 15.0.

In some embodiments, the initial polypropylene-containing material has a complex viscosity ratio above 10; preferably, a complex viscosity ratio of at least 11; more preferably, a complex viscosity ratio of at least 12.

For example, the initial polypropylene-containing material is selected to have a tan delta at 0.1 rad at 190°C above 2.5 preferably above 4.0 or ranging from 2.5 to 15.0.

### The step d) recovering a polypropylene composition

The polypropylene composition recovered in the step d) is the polypropylene composition of the disclosure.

Step d) comprises recovering a polypropylene composition that is the treated initial polypropylene-containing material.

The polypropylene composition corresponds to the treated initial material; wherein the melt index has been increased. However, surprisingly, the treatment performed also provides other features to the polypropylene composition that make it particularly suitable for injection molding. Also, the polypropylene composition has a high activation energy of flow. Indeed, the polypropylene composition has an activation energy of flow of at least 41.0 kJ/mol as determined according to the method of the description.

The polypropylene composition has a density higher than the density of the initial polypropylene-containing material.

For example, the polypropylene composition further has a VOC content lower than the VOC content of the initial polypropylene-containing material.

VOC is the amount of volatile organic compounds (VOC) in ppm wherein the volatile compounds are defined to be chains with 12 carbon atoms or a lower number. This reduction of VOC is beneficial but a very significant decrease of such content is needed to eliminate the odour.

The present disclosure encompasses articles produced from the polypropylene composition as defined above wherein the article is injection-moulded; preferably, the article is selected from a bottle or a container.

For example, the article is produced using from 40 wt.% to 100 wt.% of initial polypropylene-containing material being a recycled polypropylene-containing and has VOC content lower than the initial polypropylene-containing material.

### Test methods

The melt flow index MI₂ of the polypropylene is determined according to ISO 1133-2011 at 230 °C under a load of 2.16 kg.

Molecular weights are determined by Size Exclusion Chromatography (SEC) at high temperatures (145 °C). A 10 mg polypropylene sample is dissolved at 160 °C in 10 mL of trichlorobenzene (technical grade) for 1 hour. Analytical conditions for the GPC-IR from Polymer Char are:
- Injection volume: +/- 0.4 mL;
- Automatic sample preparation and injector temperature: 160 °C;
- Column temperature: 145 °C;
- Detector temperature: 160 °C;
- Column set: 2 Shodex AT-806MS and 1 Styragel HT6E;
- Flow rate: 1 mL/min;
- Eluent: trichlorobenzene
- Detector: IR5 Infrared detector (2800-3000 cm⁻¹);
- Calibration: Narrow standards of polystyrene (commercially available);
- Calculation for polypropylene: Based on Mark-Houwink relation (log₁₀(M_{PP}) = log₁₀(M_{PS}) - 0.25323); cut off on the low molecular weight end at M_{PP} = 1000;

The molecular weight averages used in establishing molecular weight/property relationships are the number average (Mₙ), weight average (M_{w}) and z average (M_{z}) molecular weight.

These averages are defined by the following expressions and are determined from the calculated Mᵢ: ${M}_{n} = \frac{{\sum }_{i} {N}_{i} {M}_{i}}{{\sum }_{i} {N}_{i}} = \frac{{\sum }_{i} {W}_{i}}{{\sum }_{i} {W}_{i} / {M}_{i}} = \frac{{\sum }_{i} {h}_{i}}{{\sum }_{i} {h}_{i} / {M}_{i}}$ ${M}_{w} = \frac{{\sum }_{i} {N}_{i} {M}_{i}^{2}}{{\sum }_{i} {N}_{i} {M}_{i}} = \frac{{\sum }_{i} {W}_{i} {M}_{i}}{{\sum }_{i} {M}_{i}} = \frac{{\sum }_{i} {h}_{i} {M}_{i}}{{\sum }_{i} {M}_{i}}$ ${M}_{z} = \frac{{\sum }_{i} {N}_{i} {M}_{i}^{3}}{{\sum }_{i} {N}_{i} {M}_{i}^{2}} = \frac{{\sum }_{i} {W}_{i} {M}_{i}^{2}}{{\sum }_{i} {W}_{i} {M}_{i}} = \frac{{\sum }_{i} {h}_{i} {M}_{i}^{2}}{{\sum }_{i} {h}_{i} {M}_{i}}$

Here Nᵢ and Wᵢ are the number and weight, respectively, of molecules having molecular weight Mi. The third representation in each case (farthest right) defines how one obtains these averages from SEC chromatograms. hᵢ is the height (from baseline) of the SEC curve at the iₜₕ elution fraction and Mᵢ is the molecular weight of species eluting at this increment.

The ¹³C-NMR analysis is performed using a 400 MHz or 500 MHz Bruker NMR spectrometer under conditions such that the signal intensity in the spectrum is directly proportional to the total number of contributing carbon atoms in the sample. Such conditions are well-known to the skilled person and include, for example, sufficient relaxation time etc. In practice, the intensity of a signal is obtained from its integral, *i.e.,* the corresponding area. The data are acquired using proton decoupling, 2000 to 4000 scans per spectrum with 10 mm room temperature through or 240 scans per spectrum with a 10 mm cryoprobe, a pulse repetition delay of 11 seconds, and a spectral width of 25000 Hz (+/- 3000 Hz). The sample is prepared by dissolving a sufficient amount of polymer in 1,2,4-trichlorobenzene (TCB, 99%, spectroscopic grade) at 130 °C and occasional agitation to homogenize the sample, followed by the addition of hexadeuterobenzene (C₆D₆, spectroscopic grade) and a minor amount of hexamethyldisiloxane (HMDS, 99.5+ %), with HMDS serving as an internal standard. To give an example, about 200 mg to 600 mg of polymer is dissolved in 2.0 mL of TCB, followed by the addition of 0.5 mL of C₆D₆ and 2 to 3 drops of HMDS.

Following data acquisition, the chemical shifts are referenced to the signal of the internal standard HMDS, which is assigned a value of 2.03 ppm.

**Complex** shear modulus and viscosity: **The** complex shear modulus G*(w)=G'(w)+jG"(w) (J²=-1, G'(w): storage modulus and G"(w): loss modulus) was determined using a DHR-2, a stress-controlled rheometer from **TA** Instruments. Frequency sweeps have been carried out in the linear domain (1 % strain) at 190°C from 100 to 0.01 rad.s⁻¹ under nitrogen flow to prevent thermaloxidative degradation. **The** used geometry was 25 mm diameter parallel plates with a 2 mm gap. **The** samples (25 mm diameter, 2 mm thickness) for these experiments were obtained beforehand using an injection press (Babyplast type).

**The** complex viscosity *η**(*ω*) is calculated according to the following equation of the linear viscoelasticity: $\left|η*\left(ω\right)\right| = {\left[{\left(\frac{G ′ \left(ω\right)}{ω}\right)}^{2}+{\left(\frac{G " \left(ω\right)}{ω}\right)}^{2}\right]}^{1 / 2}$

**Tan delta** is calculated from the loss modulus (G") being divided by the storage modulus (G') both determined at 0.1 rads and at 190°C.

### Flow Activation Energy (Ea) Measurement

**The** bulk dynamic rheological properties (e.g., G', G" and *η** ) of the polypropylene composition were measured at 210 °C, 230 °C and 250 °C. At each temperature, scans were performed as a function of angular shear frequency (from 300 to 0.1 rad/s) at a constant shear strain appropriately determined by the above procedure.

**The** dynamic rheological data was then analysed using the Rheometrics Software. **The** following conditions were selected for the time temperature (t-T) superposition and the determination of the flow activation energies (Ea) according to Arrhenius equation:
a_{T}= exp (Ea/kT), which relates the shift factor (a_{T}) to Ea:

| | |
|---|---|
| Rheological Parameters: | G'(ω), G"(ω) and η*(ω) |
| Reference temperature: | 230 °C |
| Shift mode: | 2D (i.e., horizontal and vertical shifts) |
| Shift Accuracy: | High |
| Interpolation Mode: | Spline |

### Examples

The following non-limiting examples illustrate the disclosure
PP1 = PPH3060 commercialised by TotalEnergies. The MI₂ is determined according to ISO 1133-2011 (230°C, 2.16 kg) is 1.8 g/10 min.

PP1 was elected as, from a melt index point of view, it is representative of the melt index of the recycled polypropylene flux that it would be interesting to transform into injection (recycled) grades.

### The screw profile P1

The products were obtained by twin screw extrusion using a co-rotating extruder from Leistritz ZSE18 MAXX/HPe 68D (cylinder diameter = 18 mm) with 1200 rpm as the maximum speed. This extruder includes 17 heating/cooling (ZIK) zones (excluding the die) that withstand a maximum temperature of 450 °C. The feeding was exclusively made in the feeding zone and was made by gravimetry. The diameter of the die is 3 mm.

The screw profile P1 is illustrated in figure 1 and is composed of four major segments:
The first segment is the one of the feeding zones, composed of successive conveying elements. The second segment is composed of progressive high shear screw elements successive kneading block elements with disks offset by 30 degrees, 60 degrees, and 90 degrees and a disk width of at least 0.3 D wherein D is the screw diameter. The third segment consists of alternating conveying screw elements and kneading block elements. The third segment comprises the hot zone of the extruder.

The fourth and last segment consists of conveying elements and the die.

The temperature profile starts with a low temperature in the feeding zone (65 °C) and is increased progressively to 250 °C in the second segment (blending-fusion segment, Z3-Z5). Then the temperature is increased progressively in Z6-Z7 (300 and 320 °C respectively) to reach the high-temperature Tₛ fixed in the zones Z8-Z12. Afterwards, the temperature is lowered progressively until it reaches 200 °C in Z17 and the die to cool the melt. The one or more hot zones of the extruder are hence aimed in the zones Z8-Z12.

### The screw profile P1

| No. element | mm | Leistritz name |
|---|---|---|
| 1 | 30 | GFA-2-20-30 |
| 2 | 60 | GFF-2-30-30-A |
| 3 | 90 | GFF-2-30-30-A |
| 4 | 120 | GFF-2-30-30-A |
| 5 | 150 | GFA-2-30-30 |
| 6 | 165 | GFA-2-30-15 |
| 7 | 195 | GFA-2-20-30 |
| 8 | 225 | GFA-2-20-30 |
| 9 | 240 | KB 4-2-15-30°-Re |
| 10 | 255 | KB 4-2-15-30°-Re |
| 11 | 270 | KB 4-2-15-60°-Re |
| 12 | 285 | KB 4-2-15-60°-Re |
| 13 | 300 | KB 4-2-15-90° |
| 14 | 315 | KB 4-2-15-90° |
| 15 | 330 | GFA-2-20-15 |
| 16 | 360 | GFA-2-30-30 |
| 17 | 390 | GFA-2-30-30 |
| 18 | 420 | GFA-2-30-30 |
| 19 | 450 | GFA-2-30-30 |
| 20 | 465 | GFA-2-20-15 |
| 21 | 480 | GFA-2-20-15 |
| 22 | 510 | GFA-2-20-30 |
| 23 | 540 | GFA-2-20-30 |
| 24 | 555 | KB 4-2-15-30°-Re |
| 25 | 570 | KB 4-2-15-60°-Re |
| 26 | 585 | GFA-2-20-15 |
| 27 | 600 | GFA-2-20-15 |
| 28 | 630 | GFA-2-20-30 |
| 29 | 660 | GFA-2-20-30 |
| 30 | 675 | KB 4-2-15-60°-Re |
| 31 | 690 | KB 4-2-15-90° |
| 32 | 720 | GFA-2-30-30 |
| 33 | 750 | GFA-2-30-30 |
| 34 | 780 | GFA-2-30-30 |
| 35 | 810 | GFA-2-30-30 |
| 36 | 840 | GFA-2-20-30 |
| 37 | 870 | GFA-2-20-30 |
| 38 | 900 | GFA-2-20-30 |
| 39 | 915 | KB 4-2-15-30°-Re |
| 40 | 930 | KB 4-2-15-60°-Re |
| 41 | 960 | GFA-2-30-30 |
| 42 | 990 | GFA-2-20-30 |
| 43 | 1020 | GFA-2-20-30 |
| 44 | 1035 | KB 4-2-15-60°-Re |
| 45 | 1050 | KB 4-2-15-60°-Re |
| 46 | 1080 | GFA-2-30-30 |
| 47 | 1110 | GFA-2-30-30 |
| 48 | 1140 | GFA-2-30-30 |
| 49 | 1170 | GFA-2-30-30 |
| 50 | 1200 | GFA-2-30-30 |
| 51 | 1215 | GFA-2-20-15 |
| 52 | 1245 | GFA-2-20-30 |
| 53 | 1275 | GFA-2-20-30 |

### The barrel configuration

| No. element | mm | Leistritz name |
|---|---|---|
| A | 75 | Zyl-E |
| B | 76 | Wärmesperre |
| C | 151 | Zyl-0/MC |
| D | 226 | Zyl-0/MC |
| E | 301 | Zyl-0/MC |
| F | 376 | Zyl-0/MC |
| G | 451 | Zyl-0/MC |
| H | 526 | Zyl-0/MC |
| I | 601 | Zyl-0/MC |
| J | 676 | Zyl-0/MC |
| K | 751 | Zyl-0/MC |
| L | 826 | Zyl-0/MC |
| M | 901 | Zyl-0/MC |
| N | 976 | Zyl-0/MC |
| O | 1051 | Zyl-0/MC |
| P | 1126 | Zyl-0/MC |
| Q | 1201 | Zyl-1/MC |
| R | 1276 | Zyl-0/MC |

The products were obtained by twin screw extrusion using a co-rotating extruder from Leistritz ZSE18 MAXX/HPe 68D (cylinder diameter = 18 mm) with 1200 rpm as the maximum speed. This extruder includes 17 heating/cooling (ZIK) zones (excluding the die) that withstand a maximum temperature of 450 °C. The feeding was exclusively made in the feeding zone and was made by gravimetry. The diameter of the die is 3 mm.

The polymer joint is driven in a cooling water bath of 2.5 m tall that ends with an airflow drying system before entering the pelletizer. The extruder is equipped with 3 efficient fume extraction arms.

### The extrusion with thermal treatment

5 samples MAT152 to MAT156 have been processed under the disclosed process to attain a given T flash temperature ranging from 320 to 450°C.

**Table 1: Extrusion outlooks**

| **Sample** | **T_{flash} (°C)** | **Flow rate (kg/h)** | **Screw speed (rpm)** | **Torque (%)** | **P1 (bar)** | **P2 (bar)** | **Tm1 (°C)** | **Tm2 (°C)** | **Motor specific energy (kWh/kg)** |
|---|---|---|---|---|---|---|---|---|---|
| MAT152 | 320 | 3 | 400 | 37 | 13 | 3 | 211 | 323 | 0,275 |
| MAT153 | 360 | 3 | 400 | 32 | 10 | 3 | 213 | 366 | 0,236 |
| MAT154 | 390 | 3 | 400 | 27 | 7 | 3 | 207 | 396 | 0,221 |
| MAT155 | 420 | 3 | 400 | 23 | 4 | 3 | 208 | 427 | 0,194 |
| MAT156 | 450 | 3 | 400 | 8 | 3 | 3 | 208 | 452 | 0,1 |

All samples could be granulated after cooling but MAT156 (450°C) was a wax-like resin. It is observed that the measured pressure at the die (P1) decreased with the Temperature of the flash extrusion zone. This is evidence of a decrease in the melt viscosity due to thermal degradation.

The results on the properties of the products are provided in Table 2

| Sample Designation | Mn (g/mol) | Mw (g/mol) | Mz (g/mol) | Mw/Mn | Mz/Mw | MI2 (g/10min) | eta0 0.1 rad/s (Pa/s) | T Flash (°C) |
|---|---|---|---|---|---|---|---|---|
| PPH3060 | 65,163 | 464,146 | 2,097,916 | 7.1 | 4.5 | 1.72 | 14,647 | - |
| MAT152 | 49,888 | 199,375 | 474,785 | 4.0 | 2.4 | 12.1 | 1,719.4 | 320 |
| MAT153 | 46,815 | 162,439 | 347,683 | 3.5 | 2.1 | 27.4 | 859.6 | 360 |
| MAT154 | 39,001 | 116,285 | 225,273 | 3.0 | 1.9 | 82 | 187.09 | 390 |
| MAT155 | 26,499 | 66,636 | 117,635 | 2.5 | 1.8 | 545 | 52.49 | 420 |
| MAT156 | 8,880 | 18,481 | 30,849 | 2.1 | 1.7 | > 500 | 5.59 | 450 |

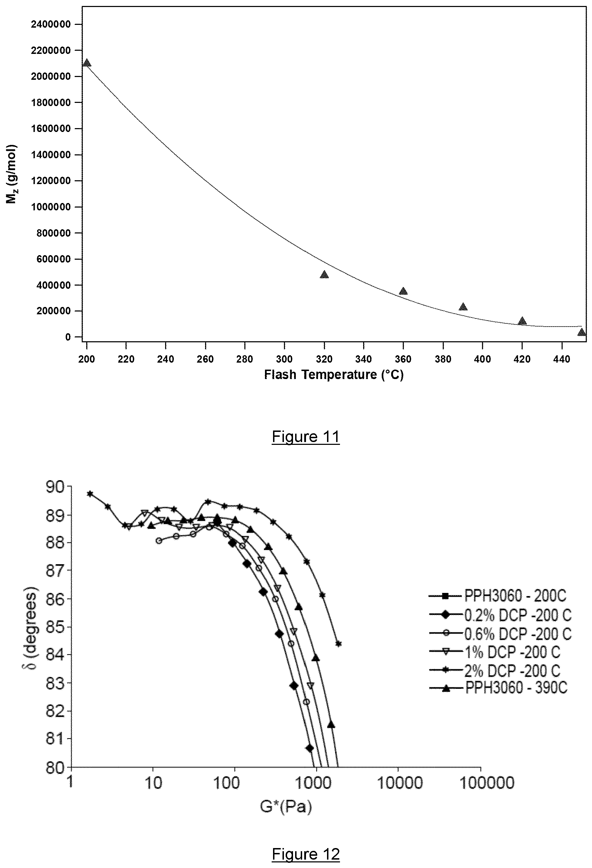

Van Gurp Palmen plot has been performed for MAT154 and compared to products obtained via peroxide degradation using different content of DCP as peroxide wherein the peroxide degradation was performed at 200°C. Figure 12 illustrates the comparison, it can be seen that similar behaviour is obtained.

### Comparative tests with between polypropylene compositions obtained by thermal treatment and polypropylene composition obtained by peroxide degradation.

All experiments were performed starting from an industrial PPC2660 grade containing:
- 2000 ppm Irganox 1010,
- 400 ppm calcium stearate

Two types of extrusions were considered
- Therm CR-PP production: The screw profile used contained three sequences of mixing elements followed by a left-handed element. Combining the use of such screw design in the Leistritz ZSE 18HPe (L/D = 40 - MPO-laboratory)) with high screw rotation speeds and a switch-off of the temperature regulation in the central zone of the extruder, important self-heating of the polymer could be induced, generating the free radicals. Change of the parameters associated to the self-heating (mainly the screw rotation speed) allows to target several melt indexes.
- Perox CR-PP production: Using a classical screw profile. Various extrusions were performed with various Trigonox 101 (2,5-Dimethyl-2,5-di(tert-butylperoxy) hexane) content. The peroxide content has been adjusted to produce grades with MFI similar to those of the produced Therm CR-PP. This has been done considering preliminary extrusions and the dependence of the melt index as a function of the peroxide content.

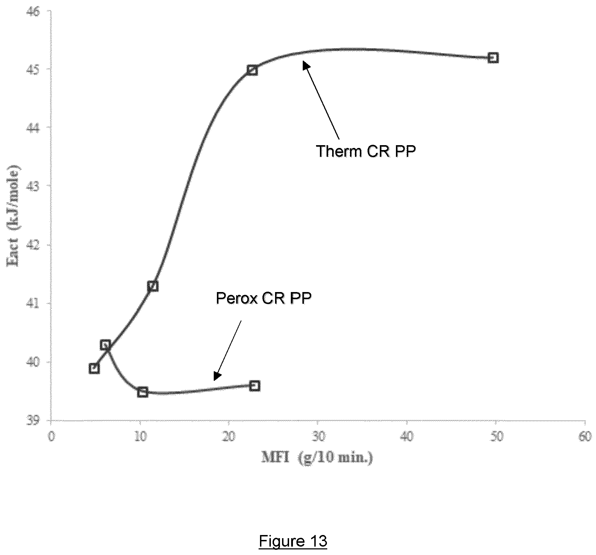

The melt index and the activation energy of flow were determined for the different samples and reported in Figure 13 and Table 3

**Table 3**

| **Sample** | **MFI (g/10 min)** | **Ea (KJ/mole)** |
|---|---|---|
| Base Polymer (PPC 2660) | 0.94 | - |
| Therm CR-PP 5 | 4.74 | 39.9 |
| Therm CR-PP 10 | 11.4 | 41.3 |
| Therm CR-PP 22 | 22.6 | 45.0 |
| Therm CR-PP 46 | 49.5 | 45.2 |
| Perox CR-PP - 350 ppm T101 | 6.1 | 40.3 |
| Perox CR-PP - 550 ppm T101 | 10.3 | 39.5 |
| Perox CR-PP - 900 ppm T101 | 22.9 | 36.6 |

From the results it can be seen that higher activation energy of flow is shown by the polypropylene produced by thermal treatment by comparison to those obtained by peroxide degradation of similar melt index.

## Claims

1. A polypropylene composition having:
- a melt index MI₂ ranging from 10.0 to 600.0 g/10 min as determined according to ISO 1133-2011 at 230 °C under a load of 2.16 kg;
- an Mz below 1,000,000 g/mol as determined by size exclusion chromatography;
- an Mw/Mn ranging from 2.2 to 10.0 as determined by size exclusion chromatography
- a ratio of complex viscosity at a frequency of 0.01 rad/sec to the complex viscosity at a frequency of 100 rad/sec of at most 8.0, said ratio being measured at 190°C according to the method defined in the description; and
- a tan delta at 0.1 rad at 190°C above 2.5 as determined according to the method defined in the description;
wherein the polypropylene composition comprises at least 70 wt.% of polypropylene based on the total weight of the polypropylene composition, and has an activation energy of flow (Ea) of at least 41.0 kJ/mol as determined according to the method of the description.

2. The polypropylene composition according to claim 1 is **characterized in that** it has an Mw below 350,000 g/mol as determined by size exclusion chromatography; and/or **in that** it has an Mn below 60,000 g/mol as determined by size exclusion chromatography.

3. The polypropylene composition according to any one of claims 1 or 2 is **characterized in that** it has an Mw/Mn ranging from 2.3 to 8.0 as determined by size exclusion chromatography; and/or **in that** it has an Mz below 600,000 g/mol as determined by size exclusion chromatography.

4. The polypropylene composition according to any one of claims 1 to 3 is **characterized in that** it has an Mz/Mw ranging from 1.5 to 7.0 as determined by size exclusion chromatography; and/or **in that** it has a complex viscosity at 0.01 rad/sec at 190° C ranging from 50 to 2,000 Pa·s.

5. The polypropylene composition according to any one of claims 1 to 4 is **characterized in that** it has a tan delta at 0.1 rad at 190°C equal to or greater than 8.0; and/or **in that** it has a tan delta at 0.1 rad at 190°C equal to or greater than 15.0.

6. The polypropylene composition according to any one of claims 1 to 5 is **characterized in that** it is produced by a process comprising the following steps:
a) providing an extruder with thermal regulation devices;
b) providing an initial polypropylene-containing material comprising at least 70 wt.% of polypropylene based on the total weight of the initial polypropylene-containing material, wherein selected to have a melt index (MI₂ R) ranging from 0.1 to 20.0 g/10 min as determined according to ISO 1133-2011 at 230 °C under a load of 2.16 kg;
c) extruding the initial polypropylene-containing material to obtain a polypropylene composition; and
d) recovering a polypropylene composition;
wherein step (c) of extruding comprises a thermal treatment of the initial polypropylene-containing material at a maximum barrel temperature **Ts** of at least 345°C in one or more hot zones of the extruder.

7. **The** polypropylene composition according to claim 6 is **characterized in that** the maximum barrel temperature **Ts** of at least 345 °C in step (c) is obtained by self-heating of the material wherein the extruder is a twin screw extruder and the one or more hot zones have a total length equal to or greater than 6 D with D being the screw diameter, wherein the extrusion is performed with mechanical specific energy greater than or equal to 0.30 kWh/kg, wherein the screw profile comprises at least one hot zone with successive kneading blocks elements over a length of at least 4 D followed by a left-handed element with D being the screw diameter, wherein the thermal regulation devices, are set to initial imposed barrel temperatures ranging between 240 and 320 °C and are switched off when the barrel temperature in the zone spontaneously exceeds the imposed barrel temperature by at least 3 °C without the need of external heat application.

8. **The** polypropylene composition according to any one of claims 6 or 7 is **characterized in that** the initial polypropylene-containing material is selected to have a melt index (MI₂ R) ranging from 0.2 to 10.0 g/10 min as determined according to ISO 1133-2011 at 230 °C under a load of 2.16 kg; preferably ranging from 0.3 to 8.0 g/10 min; more preferably ranging from 0.5 to 5.0 g/10 min; even more preferably ranging from 0.8 to 3.0 g/10 min.

9. **The** polypropylene composition according to any one of claims 6 to 8 is **characterized in that** the initial polypropylene-containing material is selected to have a melt index MI₂ ranging from 0.1 to 20.0 g/10 min as determined according to ISO 1133-2011 at 230 °C under a load of 2.16 kg; an Mz above 1,000,000 g/mol as determined by size exclusion chromatography; an Mw/Mn ranging from 2.2 to 30.0 as determined by size exclusion chromatography; a complex viscosity at a frequency of 0.01 rad/sec measured at 190°C of at least 8,000 Pa.s, and preferably a tan delta at 0.1 rad at 190°C above 2.5.

10. The polypropylene composition according to any one of claims 6 to 9 is **characterized in that** the process is devoid of a step of providing one or more peroxides, or **in that** the process comprises providing one or more peroxides wherein the content of peroxide is at most 500 ppm based on the total weight of the polypropylene-containing material.

11. The polypropylene composition according to any one of claims 6 to 10 is **characterized in that** step (c) of extruding comprises a thermal treatment of the initial polypropylene-containing material at a maximum barrel temperature Ts ranging from 345°C to less than 400°C in one or more hot zones of the extruder and **in that** the polypropylene composition recovered in step (d) has a tan delta at 0.1 rad at 190°C equal to or greater than 8.0; with preference, the maximum barrel temperature Ts ranging from 350°C to 385°C in one or more hot zones of the extruder and **in that** the polypropylene composition recovered in step (d) has a tan delta at 0.1 rad at 190°C equal to or greater than 15.0.

12. The polypropylene composition according to any one of claims 6 to 11 is **characterized in that** step (c) of extruding comprises a thermal treatment of the initial polypropylene-containing material at a maximum barrel temperature Ts ranging from 400 to 430°C in one or more hot zones of the extruder and **in that** the polypropylene composition:
- has a tan delta at 0.1 rad at 190°C that is equal to or below the tan delta of the initial polypropylene-containing material; and/or
- has a melt index (MI₂ T) that is at least 50 times higher than the melt index of the initial polypropylene-containing material provided that the polypropylene-containing material is selected to have a melt index (MI₂ R) below 3.0 g/10 min as determined according to ISO 1133-2011 at 230 °C under a load of 2.16 kg.

13. The polypropylene composition according to any one of claims 1 to 12 is **characterized in that** it comprises at least one polymer different from polypropylene in a content ranging from 0 to 20 wt.% based on the total weight of the polypropylene-containing material wherein at least one polymer different from polypropylene is selected from polyethylene (PE), polyacrylate, polypropylene terephthalate (PET), polystyrene (PS), polylactic acid (PLA), and any mixture thereof; preferably from 0.1 to 20 wt.% or from 0.5 to 5 wt.%.

14. Article produced from the polypropylene composition according to any one of claims 1 to 13, **characterized in that** the article is injection-molded; preferably, the article is selected from a bottle or a container and/or contains recycled polypropylene-containing material.

15. Method to produce an article **characterized in that** it comprises producing a polypropylene composition according to any one of claims 1 to 13 and forming an article from said polypropylene composition by injection-molding; with preference, the article is selected from a bottle or a container and/or the polypropylene composition is produced from recycled polypropylene-containing material.

## Patentansprüche

1. Polypropylenzusammensetzung, die Folgendes aufweist:
- einen Schmelzindex MI₂ im Bereich von 10,0 bis 600,0 g/10 min, bestimmt gemäß ISO 1133-2011 bei 230°C unter einer Belastung von 2,16 kg;
- einen Mz-Wert unter 1.000.000 g/mol, bestimmt mittels Größenausschlusschromatographie;
- ein Mw/Mn-Wert im Bereich von 2,2 bis 10,0, bestimmt mittels Größenausschlusschromatographie;
- ein Verhältnis der komplexen Viskosität bei einer Frequenz von 0,01 rad/s zu der komplexen Viskosität bei einer Frequenz von 100 rad/s von höchstens 8,0, wobei dieses Verhältnis bei 190°C gemäß dem in der Beschreibung definierten Verfahren gemessen wird; und
- einen Tan-Delta-Wert bei 0,1 rad und 190°C von mehr als 2,5, bestimmt gemäß dem in der Beschreibung definierten Verfahren;
wobei die Polypropylenzusammensetzung mindestens 70 Gew.-% Polypropylen, bezogen auf das Gesamtgewicht der Polypropylenzusammensetzung, umfasst und eine Aktivierungsenergie des Fließverhaltens (Ea) von mindestens 41,0 kJ/mol, bestimmt gemäß dem in der Beschreibung beschriebenen Verfahren, aufweist.

2. Polypropylenzusammensetzung nach Anspruch 1, **dadurch gekennzeichnet, dass** sie einen mittels Größenausschlusschromatographie bestimmten Mw-Wert unter 350.000 g/mol aufweist; und/oder dass sie einen mittels Größenausschlusschromatographie bestimmten Mn-Wert unter 60.000 g/mol aufweist.

3. Polypropylenzusammensetzung nach einem der Ansprüche 1 oder 2, **dadurch gekennzeichnet, dass** sie einen mittels Größenausschlusschromatographie bestimmten Mw/Mn-Wert im Bereich von 2,3 bis 8,0 aufweist, und/oder dass sie einen mittels Größenausschlusschromatographie bestimmten Mz-Wert unter 600.000 g/mol aufweist.

4. Polypropylenzusammensetzung nach einem der Ansprüche 1 bis 3, **dadurch gekennzeichnet, dass** sie einen mittels Größenausschlusschromatographie bestimmten Mz/Mw-Wert im Bereich von 1,5 bis 7,0 aufweist; und/oder dass sie eine komplexe Viskosität bei 0,01 rad/s und 190°C im Bereich von 50 bis 2.000 Pa·s aufweist.

5. Polypropylenzusammensetzung nach einem der Ansprüche 1 bis 4, **dadurch gekennzeichnet, dass** sie einen Tan-Delta-Wert bei 0,1 rad und 190°C gleich oder größer als 8,0 aufweist; und/oder dass sie einen Tan-Delta-Wert bei 0,1 rad und 190°C gleich oder größer als 15,0 aufweist.

6. Polypropylenzusammensetzung nach einem der Ansprüche 1 bis 5, **dadurch gekennzeichnet, dass** sie durch einen Prozess hergestellt wird, der die folgenden Schritte umfasst:
a) Bereitstellen eines Extruders mit Temperaturregelungsvorrichtungen;
b) Bereitstellen eines polypropylenhaltigen Ausgangsmaterials, das mindestens 70 Gew.-% Polypropylen, bezogen auf das Gesamtgewicht des polypropylenhaltigen Ausgangsmaterials, umfasst, das so ausgewählt wird, dass es einen Schmelzindex (MI₂ R) im Bereich von 0,1 bis 20,0 g/10 min, bestimmt gemäß ISO 1133-2011 bei 230°C unter einer Belastung von 2,16 kg, aufweist;
c) Extrudieren des polypropylenhaltigen Ausgangsmaterials, um eine Polypropylenzusammensetzung zu erhalten; und
d) Rückgewinnen einer Polypropylenzusammensetzung;
wobei Schritt (c) des Extrudierens eine Wärmebehandlung des polypropylenhaltigen Ausgangsmaterials bei einer maximalen Zylindertemperatur Ts von mindestens 345°C in einer oder mehreren Heizzonen des Extruders umfasst.

7. Polypropylenzusammensetzung nach Anspruch 6, **dadurch gekennzeichnet, dass** die maximale Zylindertemperatur Ts von mindestens 345°C in Schritt (c) durch Selbsterwärmung des Materials erreicht wird, wobei der Extruder ein Doppelschneckenextruder ist und die eine oder die mehreren Heizzonen eine Gesamtlänge gleich oder größer als 6 D aufweisen, wobei D der Schneckendurchmesser ist, wobei die Extrusion mit einer spezifischen mechanischen Energie größer oder gleich 0,30 kWh/kg durchgeführt wird, wobei das Schneckenprofil mindestens eine Heizzone mit aufeinanderfolgenden Knetblockelementen über eine Länge von mindestens 4 D umfasst, gefolgt von einem linksdrehenden Element, wobei D der Schneckendurchmesser ist, wobei die Temperaturregelungsvorrichtungen auf anfänglich vorgegebene Zylindertemperaturen im Bereich zwischen 240 und 320°C eingestellt sind und abgeschaltet werden, wenn die Zylindertemperatur in der Zone spontan die vorgegebene Zylindertemperatur um mindestens 3°C überschreitet, ohne dass eine externe Wärmezufuhr erforderlich ist.

8. Polypropylenzusammensetzung nach einem der Ansprüche 6 oder 7, **dadurch gekennzeichnet, dass** das polypropylenhaltige Ausgangsmaterial so ausgewählt ist, dass es einen Schmelzindex (MI₂ R) im Bereich von 0,2 bis 10,0 g/10 min aufweist, bestimmt gemäß ISO 1133-2011 bei 230°C unter einer Belastung von 2,16 kg; vorzugsweise im Bereich von 0,3 bis 8,0 g/10 min; noch bevorzugter im Bereich von 0,5 bis 5,0 g/10 min; am meisten bevorzugt im Bereich von 0,8 bis 3,0 g/10 min.

9. Polypropylenzusammensetzung nach einem der Ansprüche 6 bis 8, **dadurch gekennzeichnet, dass** das polypropylenhaltige Ausgangsmaterial so ausgewählt ist, dass es einen Schmelzindex MI₂ im Bereich von 0,1 bis 20,0 g/10 min, bestimmt gemäß ISO 1133-2011 bei 230°C unter einer Belastung von 2,16 kg; einen Mz-Wert von über 1.000.000 g/mol, bestimmt mittels Größenausschlusschromatographie; einen Mw/Mn-Wert im Bereich von 2,2 bis 30,0, bestimmt mittels Größenausschlusschromatographie; eine komplexe Viskosität bei einer Frequenz von 0,01 rad/s, gemessen bei 190°C, von mindestens 8.000 Pa·s und vorzugsweise einen Tan-Delta-Wert bei 0,1 rad und 190°C von über 2,5 aufweist.

10. Polypropylenzusammensetzung nach einem der Ansprüche 6 bis 9, **dadurch gekennzeichnet, dass** der Prozess keinen Schritt des Bereitstellens eines oder mehrerer Peroxide umfasst, oder dass der Prozess das Bereitstellen eines oder mehrerer Peroxide umfasst, wobei der Peroxidgehalt höchstens 500 ppm, bezogen auf das Gesamtgewicht des polypropylenhaltigen Materials, beträgt.

11. Polypropylenzusammensetzung nach einem der Ansprüche 6 bis 10, **dadurch gekennzeichnet, dass** der Schritt (c) des Extrudierens eine Wärmebehandlung des polypropylenhaltigen Ausgangsmaterials bei einer maximalen Zylindertemperatur Ts im Bereich von 345°C bis unter 400°C in einer oder mehreren Heizzonen des Extruders umfasst und dass die in Schritt (d) zurückgewonnene Polypropylenzusammensetzung einen Tan-Delta-Wert bei 0,1 rad und 190°C gleich oder größer als 8,0 aufweist; vorzugsweise wobei die maximale Zylindertemperatur Ts in einer oder mehreren Heizzonen des Extruders im Bereich von 350°C bis 385°C liegt, und dadurch, dass die in Schritt (d) zurückgewonnene Polypropylenzusammensetzung einen Tan-Delta-Wert bei 0,1 rad und 190°C gleich oder größer als 15,0 aufweist.

12. Polypropylenzusammensetzung nach einem der Ansprüche 6 bis 11, **dadurch gekennzeichnet, dass** Schritt (c) des Extrudierens eine Wärmebehandlung des polypropylenhaltigen Ausgangsmaterials bei einer maximalen Zylindertemperatur Ts im Bereich von 400 bis 430°C in einer oder mehreren Heizzonen des Extruders umfasst und dass die Polypropylenzusammensetzung:
- einen Tan-Delta-Wert bei 0,1 rad und 190°C aufweist, der gleich oder kleiner ist als der Tan-Delta-Wert des polypropylenhaltigen Ausgangsmaterials; und/oder
- einen Schmelzindex (MI₂ T) aufweist, der mindestens 50-mal höher ist als der Schmelzindex des polypropylenhaltigen Ausgangsmaterials, vorausgesetzt, das polypropylenhaltige Material wird so ausgewählt, dass es einen Schmelzindex (MI₂ R) unter 3,0 g/10 min aufweist, bestimmt gemäß ISO 1133-2011 bei 230°C unter einer Belastung von 2,16 kg.

13. Polypropylenzusammensetzung nach einem der Ansprüche 1 bis 12, **dadurch gekennzeichnet, dass** sie mindestens ein von Polypropylen verschiedenes Polymer in einem Gehalt von 0 bis 20 Gew.-%, bezogen auf das Gesamtgewicht des polypropylenhaltigen Materials, umfasst, wobei das mindestens eine von Polypropylen verschiedene Polymer ausgewählt ist aus Polyethylen (PE), Polyacrylat, Polypropylenterephthalat (PET), Polystyrol (PS), Polymilchsäure (PLA) und beliebigen Mischungen davon; vorzugsweise von 0,1 bis 20 Gew.-% oder von 0,5 bis 5 Gew.-%.

14. Gegenstand, der aus der Polypropylenzusammensetzung nach einem der Ansprüche 1 bis 13 hergestellt ist, **dadurch gekennzeichnet, dass** der Gegenstand im Spritzgussverfahren hergestellt ist; der Gegenstand vorzugsweise ausgewählt ist aus einer Flasche oder einem Behälter und/oder recyceltes polypropylenhaltiges Material enthält.

15. Verfahren zur Herstellung eines Gegenstands, **dadurch gekennzeichnet, dass** es die Herstellung einer Polypropylenzusammensetzung nach einem der Ansprüche 1 bis 13 und die Formung eines Gegenstands aus dieser Polypropylenzusammensetzung durch Spritzgießen umfasst; der Gegenstand vorzugsweise ausgewählt ist aus einer Flasche oder einem Behälter und/oder die Polypropylenzusammensetzung aus recyceltem, polypropylenhaltigem Material hergestellt ist.

## Revendications

1. Composition de polypropylène présentant :
- un indice de fusion MI₂, tel que déterminé conformément à la norme ISO 1133-2011 à 230 °C et sous une charge de 2,16 kg, situé dans la plage allant de 10,0 à 600,0 g/10 min ;
- une Mz, telle que déterminée par chromatographie d'exclusion diffusion, inférieure à 1 000 000 g/mol ;
- un rapport Mw/Mn, tel que déterminé par chromatographie d'exclusion diffusion, situé dans la plage allant de 2,2 à 10,0 ;
- un rapport de la viscosité complexe à une fréquence de 0,01 rad/s à la viscosité complexe à une fréquence de 100 rad/s d'au plus 8,0, ledit rapport étant mesuré à 190 °C conformément à la méthode définie dans la description ; et
- une valeur tan delta à 0,1 rad et à 190 °C, telle que déterminée conformément à la méthode définie dans la description, supérieure à 2,5 ;
laquelle composition de polypropylène comprend au moins 70 % en poids, par rapport au poids total de la composition de polypropylène, de polypropylène, et présente une énergie d'activation de l'écoulement (Ea), telle que déterminée conformément à la méthode de la description, d'au moins 41,0 kJ/mol.

2. Composition de polypropylène selon la revendication 1, **caractérisée en ce qu'**elle présente une Mw, telle que déterminée par chromatographie d'exclusion diffusion, inférieure à 350 000 g/mol ; et/ou **en ce qu'**elle présente une Mn, telle que déterminée par chromatographie d'exclusion diffusion, inférieure à 60 000 g/mol.

3. Composition de polypropylène selon l'une quelconque des revendications 1 et 2, **caractérisée en ce qu'**elle présente un rapport Mw/Mn, tel que déterminé par chromatographie d'exclusion diffusion, situé dans la plage allant de 2,3 à 8,0 ; et/ou **en ce qu'**elle présente une Mz, telle que déterminée par chromatographie d'exclusion diffusion, inférieure à 600 000 g/mol.

4. Composition de polypropylène selon l'une quelconque des revendications 1 à 3, **caractérisée en ce qu'**elle présente un rapport Mz/Mw, tel que déterminé par chromatographie d'exclusion diffusion, situé dans la plage allant de 1,5 à 7,0 ; et/ou **en ce qu'**elle présente une viscosité complexe à 0,01 rad/s et à 190 °C située dans la plage allant de 50 à 2 000 Pa·s.

5. Composition de polypropylène selon l'une quelconque des revendications 1 à 4, **caractérisée en ce qu'**elle présente une valeur tan delta à 0,1 rad et à 190 °C égale ou supérieure à 8,0 ; et/ou **en ce qu'**elle présente une valeur tan delta à 0,1 rad et à 190 °C égale ou supérieure à 15,0.

6. Composition de polypropylène selon l'une quelconque des revendications 1 à 5, **caractérisée en ce qu'**elle est produite par un procédé comprenant les étapes suivantes :
a) la fourniture d'une extrudeuse dotée de dispositifs de régulation thermique ;
b) la fourniture d'un matériau contenant du polypropylène initial comprenant au moins 70 % en poids, par rapport au poids total du matériau contenant du polypropylène initial, de polypropylène, choisi de façon à présenter un indice de fusion (MI₂ R), tel que déterminé conformément à la norme ISO 1133-2011 à 230 °C et sous une charge de 2,16 kg, situé dans la plage allant de 0,1 à 20,0 g/10 min ;
c) l'extrusion du matériau contenant du polypropylène initial pour que soit obtenue une composition de polypropylène ; et
d) la récupération d'une composition de polypropylène ;
dans laquelle l'étape (c) d'extrusion comprend un traitement thermique du matériau contenant du polypropylène initial à une température de cylindre maximale Ts d'au moins 345 °C dans une ou plusieurs zones chaudes de l'extrudeuse.

7. Composition de polypropylène selon la revendication 6, **caractérisée en ce que** la température de cylindre maximale Ts d'au moins 345 °C dans l'étape (c) est obtenue par auto-échauffement du matériau, dans laquelle l'extrudeuse est une extrudeuse double vis et la ou les zones chaudes présentent une longueur totale égale ou supérieure à 6 D, D étant le diamètre de vis, dans laquelle l'extrusion est effectuée avec une énergie spécifique mécanique supérieure ou égale à 0,30 kWh/kg, dans laquelle le profil de vis comprend au moins une zone chaude avec des éléments de blocs malaxeurs successifs sur une longueur d'au moins 4 D, suivis d'un élément à pas gauche, D étant le diamètre de vis, dans laquelle les dispositifs de régulation thermique sont réglés à des températures de cylindre imposées initiales comprises entre 240 et 320 °C et sont mis hors service quand la température de cylindre dans la zone dépasse spontanément d'au moins 3 °C la température de cylindre imposée sans qu'une application de chaleur externe ne soit nécessaire.

8. Composition de polypropylène selon l'une quelconque des revendications 6 et 7, **caractérisée en ce que** le matériau contenant du polypropylène initial est choisi de façon à présenter un indice de fusion (MI₂ R), tel que déterminé conformément à la norme ISO 1133-2011 à 230 °C et sous une charge de 2,16 kg, situé dans la plage allant de 0,2 à 10,0 g/10 min, de préférence situé dans la plage allant de 0,3 à 8,0 g/10 min ; mieux encore situé dans la plage allant de 0,5 à 5,0 g/10 min ; plus particulièrement situé dans la plage allant de 0,8 à 3,0 g/10 min.

9. Composition de polypropylène selon l'une quelconque des revendications 6 à 8, **caractérisée en ce que** le matériau contenant du polypropylène initial est choisi de façon à présenter un indice de fusion MI₂, tel que déterminé conformément à la norme ISO 1133-2011 à 230 °C et sous une charge de 2,16 kg, situé dans la plage allant de 0,1 à 20,0 g/10 min ; une Mz, telle que déterminée par chromatographie d'exclusion diffusion, supérieure à 1 000 000 g/mol ; un rapport Mw/Mn, tel que déterminé par chromatographie d'exclusion diffusion, situé dans la plage allant de 2,2 à 30,0 ; une viscosité complexe à une fréquence de 0,01 rad/s, mesurée à 190 °C, d'au moins 8 000 Pa·s, et de préférence une valeur tan delta à 0,1 rad et à 190 °C supérieure à 2,5.

10. Composition de polypropylène selon l'une quelconque des revendications 6 à 9, **caractérisée en ce que** le procédé est exempt d'étape de fourniture d'un ou plusieurs peroxydes, ou **en ce que** le procédé comprend la fourniture d'un ou plusieurs peroxydes, dans laquelle la teneur en peroxyde est d'au plus 500 ppm par rapport au poids total du matériau contenant du polypropylène.

11. Composition de polypropylène selon l'une quelconque des revendications 6 à 10, **caractérisée en ce que** l'étape (c) d'extrusion comprend un traitement thermique du matériau contenant du polypropylène initial à une température de cylindre maximale Ts située dans la plage allant de 345 °C à moins de 400 °C dans une ou plusieurs zones chaudes de l'extrudeuse, et **en ce que** la composition de polypropylène récupérée dans l'étape (d) présente une valeur tan delta à 0,1 rad et à 190 °C égale ou supérieure à 8,0 ; de préférence la température de cylindre maximale Ts étant située dans la plage allant de 350 °C à 385 °C dans une ou plusieurs zones chaudes de l'extrudeuse, et **en ce que** la composition de polypropylène récupérée dans l'étape (d) présente une valeur tan delta à 0,1 rad et à 190 °C égale ou supérieure à 15,0.

12. Composition de polypropylène selon l'une quelconque des revendications 6 à 11, **caractérisée en ce que** l'étape (c) d'extrusion comprend un traitement thermique du matériau contenant du polypropylène initial à une température de cylindre maximale Ts située dans la plage allant de 400 à 430 °C dans une ou plusieurs zones chaudes de l'extrudeuse et **en ce que** la composition de polypropylène :
- présente une valeur tan delta à 0,1 rad et à 190 °C égale ou inférieure à la valeur tan delta du matériau contenant du polypropylène initial ; et/ou
- présente un indice de fusion (MI₂ T) qui est supérieur d'au moins 50 fois à l'indice de fusion du matériau contenant du polypropylène initial, sous réserve que le matériau contenant du polypropylène soit choisi de façon à présenter un indice de fusion (MI₂ R), tel que déterminé conformément à la norme ISO 1133-2011 à 230 °C et sous une charge de 2,16 kg, inférieur à 3,0 g/10 min.

13. Composition de polypropylène selon l'une quelconque des revendications 1 à 12, **caractérisée en ce qu'**elle comprend au moins un polymère différent du polypropylène en une teneur située dans la plage allant de 0 à 20 % en poids, de préférence de 0,1 à 20 % en poids ou de 0,5 à 5 % en poids, par rapport au poids total du matériau contenant du polypropylène, dans laquelle au moins un polymère différent du polypropylène est choisi parmi le polyéthylène (PE), un polyacrylate, le poly(téréphtalate de propylène) (PET), le polystyrène (PS), le poly(acide lactique) (PLA) et l'un quelconque de leurs mélanges.

14. Article produit à partir de la composition de polypropylène selon l'une quelconque des revendications 1 à 13, **caractérisé en ce que** l'article est moulé par injection ; de préférence l'article est choisi parmi une bouteille et un récipient et/ou contient un matériau contenant du polypropylène recyclé.

15. Méthode pour produire un article, **caractérisée en ce qu'**elle comprend la production d'une composition de polypropylène selon l'une quelconque des revendications 1 à 13 et la formation d'un article à partir de ladite composition de polypropylène par moulage par injection ; de préférence l'article est choisi parmi une bouteille et un récipient et/ou la composition de polypropylène est produite à partir de matériau contenant du polypropylène recyclé.
